# EUROPEAN PATENT SPECIFICATION

(11) **EP 4 375 812 B1**
(45) Date of publication and mention of the grant of the patent: **25.03.2026**
(21) Application number: 22306731.5
(22) Date of filing: 24.11.2022
(51) Int. Cl.: G06F 3/0346

(54) **DETECTION OF A LOCATION OF A USER-BORNE DEVICE WITH A PLURALITY OF MAGNETOMETERS**
DETEKTION EINES STANDORTS EINES BENUTZERGETRAGENEN GERÄTS MIT MEHREREN MAGNETOMETERN
DÉTECTION D'UN EMPLACEMENT D'UN DISPOSITIF PORTÉ PAR L'UTILISATEUR AVEC UNE PLURALITÉ DE MAGNÉTOMÈTRES

(43) Date of publication of application: 29.05.2024
(73) Proprietor: Advanced Magnetic Interaction, AMI, 38170 Seyssinet-Pariset (FR)
(72) Inventor: Hautson, Tristan, 38170 Seyssinet-Pariset (FR); Pellerano, Vincent Thomas, 38170 Seyssinet-Pariset (FR)
(74) Representative: Peterreins Schley

(56) References cited:
- US-A1- 2005 083 316
- US-A1- 2013 249 784
- US-A1- 2014 327 659
- US-A1- 2016 065 855
- US-A1- 2017 277 282
- US-A1- 2019 265 806

## Description

### TECHNICAL FIELD

The present disclosure relates to the field of passive accessory location tracking, more specifically to a computer-implemented method for determining a location of a user-borne device, and to a system for determining a location of a user-borne device.

### BACKGROUND

In the technical field of location determination and/or tracking of a device held or worn by user (i.e., a user-borne device), the provision of a plurality of magnetometers to measure a magnetic field associated with a magnetic object arranged in the user-borne device is known. The magnetometer measurements enable determination and/or tracking of the location of the magnetic object within a sensing volume. In current applications, the magnetic object may be arranged within a writing device (e.g., a stylus) which is operated by a user on a writing support during a user operation. Based on the magnetic field measurements associated with the magnetic object, a location of the writing device on the writing support may be determined and reproduced on a visual screen.

Document US 2016/065855 A1 discloses a method for controlling a graphical interface including calculating coordinates of a permanent magnet and direction of magnetic moment of the permanent magnet from magnetometer measurements. Document US 2013/249784 A1 discloses a method for pose tracking using vector magnetometers of a user-borne computer input device including a 5D or greater "mouse" or other tool or object containing or consisting of one or more permanent magnetic presenting permanent magnetic dipoles. Document US 2017/277282 A1 discloses an input device for transmitting a user input using a magnetic field generator. Document US 2019/265806 A1 discloses a virtual reality enclosure with magnetic field sensing and a method for determining user input. Document US 2005/083316A1 discloses a stylus that operates utilizing magnetic fields, wherein a permanent magnet is disposed within a passive stylus that is detectable by a plurality of magnetic sensors. Document US 2014/327659 A1 discloses an electronic apparatus equipped with at least one magnetic sensor for obtaining a change of an external magnetic field and controlling content displayed on a screen according to the change.

Determining and/or tracking the location of the user-borne device by means of the magnetic object requires the definition of an interaction surface, i.e., a surface on which the user-borne device is operated. The magnetic object is usually distanced to the interaction surface. In the current applications of a writing device operated on a writing support, it is assumed that the interaction surface is exactly parallel to and directly above a magnetometer plane (e.g., a plane which is defined by the plurality of magnetometers). An example may be a writing device being operated directly on a display of a tablet including the plurality of magnetometers arranged below the display. However, this is mostly not the case due to manufacturing tolerances with respect to the plurality of magnetometers and the interaction surface, specific magnetometer arrangements, uneven interaction surfaces and/or specific arrangements of interaction surfaces. More specifically, the plurality of magnetometers may not be arranged exactly in the same magnetometer plane and/or may be arranged inclined with respect to the interaction surface. Assuming the interaction surface to be exactly parallel may limit the applications of user-borne device location determination and/or tracking. In other examples the user-borne device may be operated on uneven interaction surfaces, e.g., interaction surfaces having different positions and/or orientations with respect to the magnetometer plane (e.g., a notebook with spirals used as a support for a computer mouse or as a support for a writing and/or drawing device which may comprise uneven surfaces). However, assuming the interaction surface to be exactly parallel to and directly above the magnetometer plane can lead to inaccurate location determination and/or tracking of the user-borne device relative to the interaction surface and thus to an imprecise reproduction on a visual screen.

Thus, the object of the present disclosure is to provide a computer-implemented method and a system for determining a location of a user-borne device with increased accuracy and reliability.

### SUMMARY

The present disclosure relates to a computer-implemented method for determining a location of a user-borne device as defined in claim 1, and a system for determining a location of a user-borne device as defined in claim 12. The dependent claims depict embodiments of the present disclosure.

According to a first aspect of the present disclosure, a computer-implemented method for determining a location of a user-borne device is provided. The computer-implemented method comprises collecting magnetic field measurements associated with at least one magnetic object with a plurality of magnetometers. The plurality of magnetometers is configured to create a sensing volume and is associated with a magnetometer plane. The at least one magnetic object is coupled to a user-borne device, wherein the user-borne device is operable on an interaction surface defined within the sensing volume. Furthermore, the computer-implemented method comprises generating magnetic object location data associated with the at least one magnetic object based on the collected magnetic field measurements. The computer-implemented method comprises determining a user-borne device location relative to the interaction surface based on the magnetic object location data, wherein the interaction surface comprises an interaction surface configuration in which at least two interaction surface portions are arranged at different portion distances with respect to the magnetometer plane. Determining the user-borne device location comprises determining an interaction surface location, wherein the interaction surface location is indicative of an interaction surface position, an interaction surface orientation and/or an interaction surface distance relative to a reference coordinate system comprising a first reference axis and a second reference axis being defined on the magnetometer plane and being orthogonal to each other.

As the determination of the location of the user-borne device relative to the interaction surface by the computer-implemented method considers an interaction surface configuration in which at least two interaction surface portions are arranged at different portion distances with respect to the magnetometer plane, the location of a user-borne device can be determined and/or tracked with increased accuracy. Furthermore, a reproduction of the user-borne device as a virtual object can be provided with increased accuracy and reliability. Any manufacturing tolerances with respect to the plurality of magnetometers and the interaction surface, specific magnetometer arrangements, uneven interaction surfaces and/or specific arrangements of interaction surfaces can be considered and/or compensated.

According to a second aspect of the present disclosure, a system for determining a location of a user-borne device comprises a user-borne device operable on an interaction surface, wherein the user-borne device comprises at least one magnetic object. Furthermore, the system comprises a plurality of magnetometers configured to create a sensing volume and being associated with a magnetometer plane. The interaction surface is defined within the sensing volume. The plurality of magnetometers is configured to collect magnetic field measurements associated with the at least one magnetic object. The interaction surface comprises an interaction surface configuration in which at least two interaction surface portions are arranged at different portion distances with respect to the magnetometer plane. Furthermore, the system is configured to execute a computer-implemented method according to the first aspect of the present disclosure. When determining the location of the user-borne device relative to the interaction surface, the system considers an interaction surface configuration in which at least two interaction surface portions are arranged at different portion distances with respect to the magnetometer plane. Thereby, a location of a user-borne device relative to an interaction surface can be determined and/or tracked with increased accuracy. Furthermore, a reproduction of the user-borne device as a virtual object can be provided with increased accuracy and reliability. Any manufacturing tolerances with respect to the plurality of magnetometers and the interaction surface, specific magnetometer arrangements, uneven interaction surfaces and/or specific arrangements of interaction surfaces can be considered and/or compensated.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a schematic view of a system for determining a location of a user-borne device according to the present disclosure;
- **Fig. 2**: is a more detailed schematic view of a system for determining a location of a user-borne device according to the present disclosure, wherein the interaction surface comprises a first interaction surface configuration;
- **Fig. 3**: is a more detailed schematic view of a system for determining a location of a user-borne device according to the present disclosure, wherein the interaction surface comprises a second interaction surface configuration;
- **Figs. 4A and 4B**: are more detailed schematic views of a system for determining a location of a user-borne device according to the present disclosure, wherein the interaction surface comprises the first interaction surface configuration;
- **Fig. 5**: is a schematic view of a system for determining a location of another user-borne device according to the present disclosure;
- **Figs. 6A and 6B**: are schematic views of a user-borne device comprising at least one magnetic object;
- **Figs. 7A and 7B**: are schematic views of a user-borne device comprising at least one magnetic object, wherein the magnetic object is rotatable about a second user-borne device axis;
- **Figs. 8A and 8B**: are schematic views of a user-borne device comprising at least one magnetic object, wherein the magnetic object is rotatable about a first user-borne device axis;
- **Fig. 9**: is a schematic view of a plurality of magnetometers arranged in rows and columns with respect to an interaction support;
- **Fig. 10**: is a schematic view of a user-borne device moved on an interaction support surface;
- **Fig. 11**: schematically illustrates a computer-implemented method for determining a location of a user-borne device according to an aspect of the present disclosure.

### DETAILED DESCRIPTION

Embodiments of the computer-implemented method for determining a location of a user-borne device and the system for determining a location of a user-borne device according to the present disclosure will be described in reference to the drawings as follows.

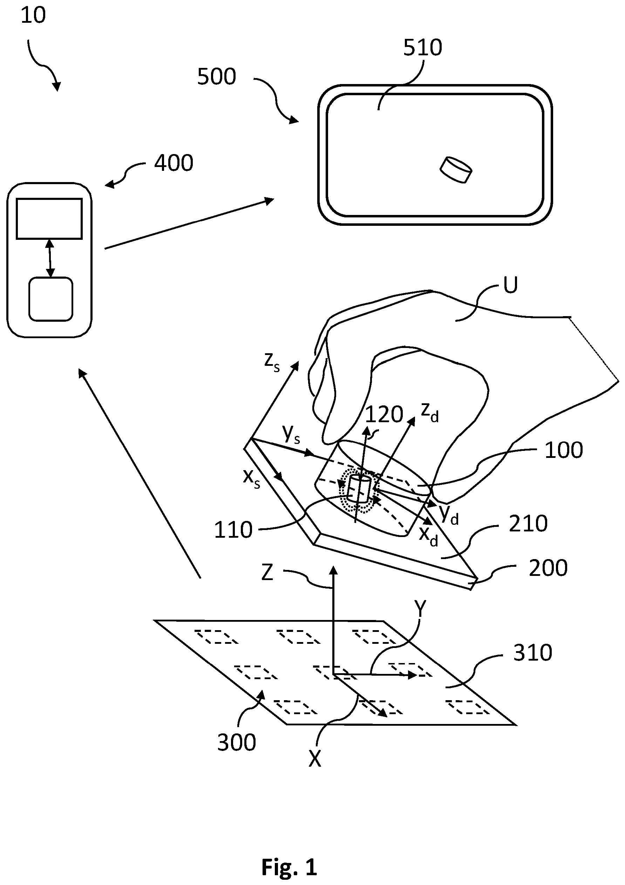

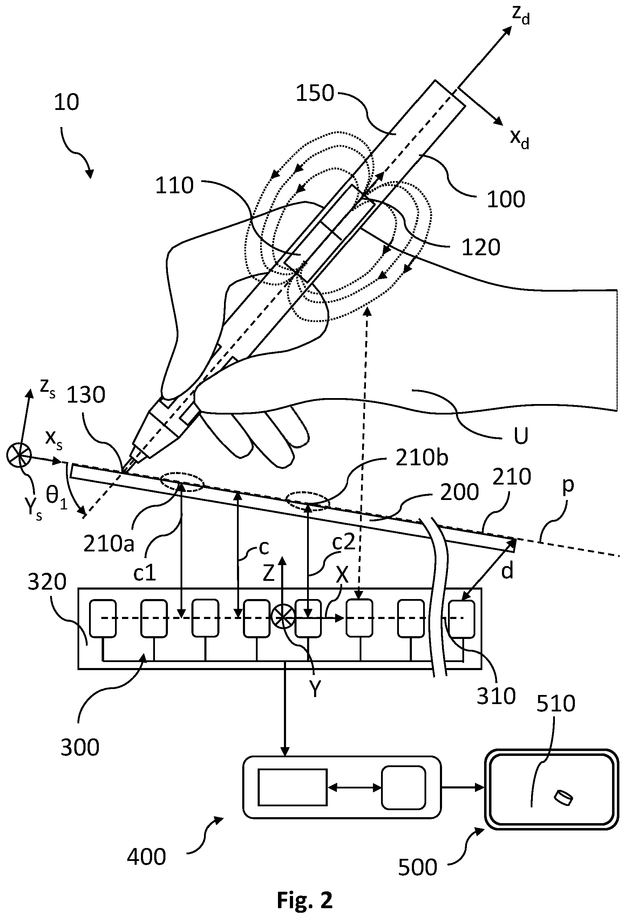

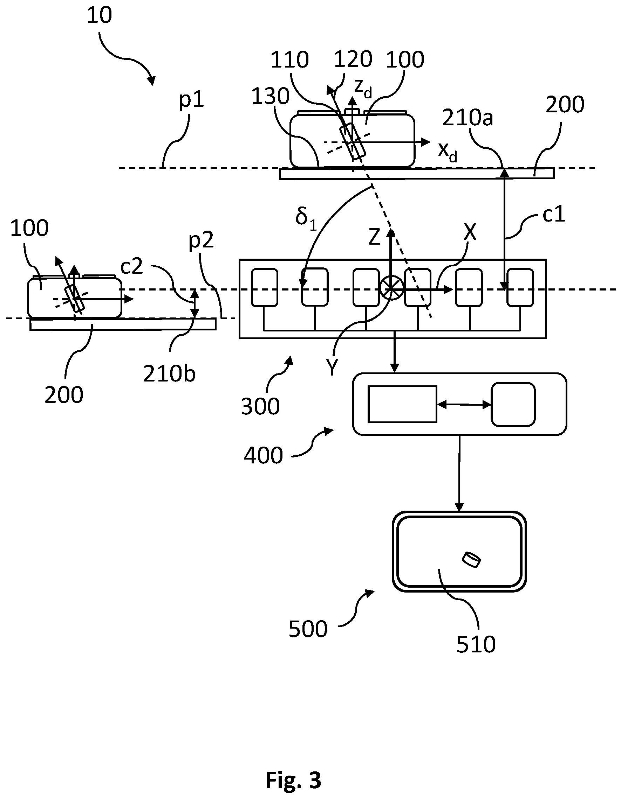

Fig. 1 is a schematic view of a system 10 for determining a location of a user-borne device 100 according to an aspect of the present disclosure. More specifically, the system 10 may be suitable for determining a location of an electrically and/or electronically passive user-borne device 100. In other words, the system 10 may be suitable for determining and/or tracking a location of a user-borne device 100 within a sensing volume. The system 10 comprises a user-borne device 100 operable on an interaction surface 210. The user-borne device 100 comprises or may be coupled to at least one magnetic object 110. Furthermore, the system 10 comprises a plurality of magnetometers 300 configured to create a sensing volume and being associated with a magnetometer plane 310. The interaction surface 210 is defined within the sensing volume. More specifically, the plurality of magnetometers 300 may be configured to create a sensing volume having an ellipsoidal form. In other words, the plurality of magnetometers 300 allows the measurement and tracking of a magnetic field associated with the at least one magnetic object 110 within an ellipsoidal volume and thus in three dimensions. The interaction surface may be arranged within this ellipsoidal sensing/tracking volume. The plurality of magnetometers 300 is configured to collect magnetic field measurements associated with the at least one magnetic object 110. The interaction surface 210 comprises an interaction surface configuration in which at least two interaction surface portions 210a, 210b are arranged at different portion distances with respect to the magnetometer plane 310. A first and a second interaction surface configuration will be described below with reference to Figs. 2 and 3. The system 10 is configured to execute a computer-implemented method 600 for determining a location of a user-borne device 100, which is also described below in detail. More specifically, the system 10 is configured to collect magnetic field measurements associated with the at least one magnetic object 110 with the plurality of magnetometers 300. The plurality of magnetometers 300 may be configured to collect magnetic field measurements associated with the at least one magnetic object 110 within the sensing volume up to a maximum measurement distance d. In embodiments, the maximum measurement distance d may be 18cm, more specifically 15cm. Furthermore, the system 10 is configured to generate magnetic object location data associated with the at least one magnetic object 110 based on the collected magnetic field measurements. Additionally, the system 10 is configured to determine a user-borne device location relative to the interaction surface 210 based on the magnetic object location data. When determining the location of the user-borne device 100 relative to the interaction surface 210, the system 10 considers and/or takes into account the interaction surface configuration as described above, in which at least two interaction surface portions 210a, 210b are arranged at different portion distances c1, c2 with respect to the magnetometer plane 310. Thereby, a location of a user-borne device 100 relative to an interaction surface 210 can be determined and/or tracked with increased accuracy. Furthermore, a reproduction of the user-borne device 100 as a virtual object can be provided with increased accuracy and reliability. Any manufacturing tolerances with respect to the plurality of magnetometers 300 and the interaction surface 210, specific magnetometer arrangements, uneven interaction surfaces 210 and/or specific arrangements of interaction surfaces 210 can be considered and/or compensated.

The plurality of magnetometers 300 may be fixedly arranged in a magnetometer body 320 (see, e.g., Fig. 2) defining a fixed position and/or orientation of the plurality of magnetometers (300) with respect to each other. The magnetometer plane 310 may be defined by a plane that extends through a majority of the plurality of magnetometers 300. More specifically, the magnetometer plane 310 may extend through centers, more specifically geometric centers, of a majority of the plurality of magnetometers 300. In other words, most of the magnetometers of the plurality of magnetometers 300 may be arranged in a common plane, i.e., the magnetometer plane 310. However, one or more magnetometers of the plurality of magnetometers 300 may be distanced and/or inclined with respect to the common plane, e.g., due to manufacturing issues and/or tolerances and/or manufacturing design constraints. The magnetometer plane 310 may additionally or alternatively be defined by a plane in which the magnetometers of the plurality of magnetometers 300 are predominantly arranged.

As indicated in Fig. 1, the system 10 may comprise a reference coordinate system XYZ comprising a first reference axis X, a second reference axis Y and a vertical reference axis Z. The first reference axis X and the second reference axis Y may be defined on the magnetometer plane 310 and may be orthogonal to each other. The vertical reference axis Z may be orthogonal to the magnetometer plane 310. Furthermore, the vertical reference axis Z may extend through a center of the plurality of magnetometers 300. In other words, the plurality of magnetometers 300 may be arranged at certain positions and/or orientations within the magnetometer body 320. The vertical axis Z may extend through a center of the plurality of magnetometers 300 arranged within the magnetometer body 320, more specifically orthogonal to the magnetometer plane 310.

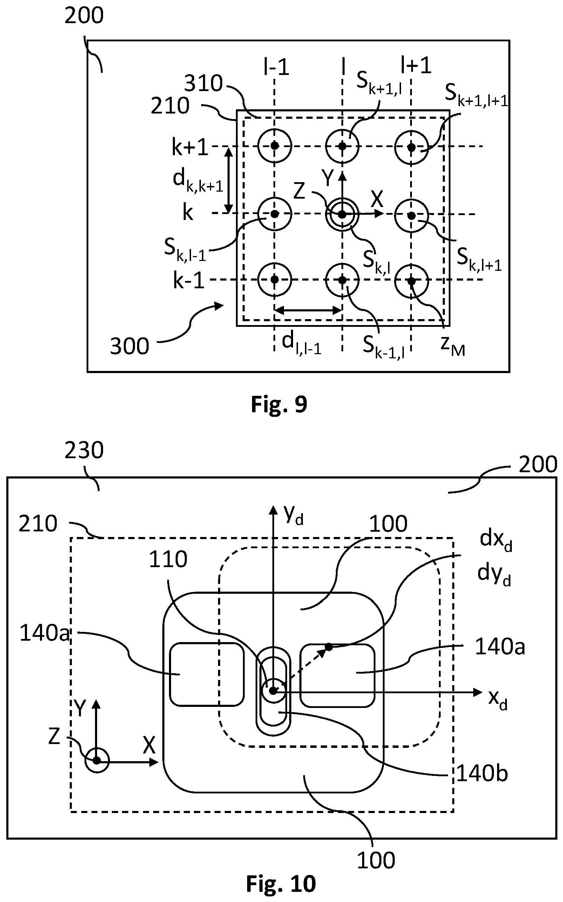

Referring to Fig. 9, an arrangement of the plurality of magnetometers with respect to the interaction surface 210 defined on the interaction support 200 is shown. As outlined above, the plurality of magnetometers 300 is configured to measure a magnetic field associated with the at least one magnetic object 110. The system 10 may be configured to determine magnetic object location data based on the collected magnetic field measurements within the sensing volume relative to the reference coordinate system XYZ. Magnetic object location data may be indicative of a magnetic object position and/or a magnetic object orientation associated with the at least one magnetic object 110 relative to the reference coordinate system XYZ, more specifically to the magnetometer plane 310. The magnetic object orientation may be defined by a set of magnetic object orientation angles δ₁, δ₂, δ₃ relative to the reference coordinate axes. More specifically, respective magnetic object orientation angles δ₁, δ₂, δ₃ may be measured between the magnetic moment vector 120 and the respective axes X, Y, Z of the reference coordinate system XYZ. For example, as shown in Fig. 3, the first magnetic object orientation angle δ₁ is defined between the first reference axis X and the magnetic moment vector 120, more specifically in the XZ-plane. As outlined above, each magnetometer of the plurality of magnetometers 300 may be configured to measure the magnetic field associated with the at least one magnetic object 110 in the direction of the first reference axis X, the second reference axis Y, and/or the vertical reference axis Z. In other words, each magnetometer of the plurality of magnetometers 300 may be configured to perform magnetic field measurements in the direction of one axis (i.e., one dimension), two axes (i.e., two dimensions), or three axes (i.e., three dimensions). The number of magnetometers provided may depend on the size of the interaction surface 210, on which the user-borne device 100 is operated. In other words, the larger the interaction surface 210, the more magnetometers 300 may be provided. In the embodiment shown in Fig. 9, the plurality of magnetometers 300 may be arranged in rows and columns. However, it is also possible that the plurality of magnetometers may be arranged in an unordered manner within the magnetometer body 320. A calibration procedure may be used to determine the exact locations (more specifically, positions and/or orientations) and measurement axes of each magnetometer within the magnetometer body 320 relative to the reference coordinate system. Furthermore, a sensitivity and/or an offset of each magnetometer may also be calibrated. The plurality of magnetometers 300 are shown in Fig. 9 as being arranged in the magnetometer plane 310 (i.e., in the same plane relative to the vertical reference axis Z). However, as outlined above, one or more of the magnetometers may be distanced to the magnetometer plane 310, more specifically distanced in the direction of the vertical reference axis Z.

In the arrangement of Fig. 9, the plurality of magnetometers 300 may be arranged in the magnetometer body 320 in rows k and columns l. Fig. 9 illustrates some magnetometers S_{k,l} of the plurality of magnetometers 300. Each magnetometer S_{k,l} may comprise a vertical magnetometer axis z_{M} which may be arranged on the intersections of the rows k and columns l. Adjacent magnetometers S_{k,l}, S_{k,l+1}, S_{k,l-1} may be separated along a row k by a distance d_{l,l+1} and d_{l,l-1}. Adjacent magnetometers S_{k,l}, S_{k+1,l}, S_{k-1,l} may be separated along a column l by a distance d_{k,k+1} and d_{k,k-1}. As outlined above, the distances dₖ, dₗ between the respective magnetometers S_{k,l} may be equal or may differ.

A location of the user-borne device 100 may include a device position and/or a device orientation relative to the interaction surface 210. The term "at least one magnetic object" may refer to an object which may comprise components made of magnetic material, i.e., a material that has magnetic properties measurable by the plurality of magnetometers 300. The user-borne device 100 and/or the at least one magnetic object 210 may be mobile, i.e., freely movable within the reference coordinate system XYZ. In other words, during a user operation (i.e., an operation wherein the user-borne device 100 and/or the at least one magnetic object 110 is operated by a user), the location of the user-borne device 100 relative to the interaction surface 210 may be manipulated by a user within the sensing volume.

As indicated in the embodiment shown in Fig. 1, the system 10 may further comprise a processing unit 400 configured to execute the computer-implemented method 600 for determining a location of the user-borne device 100. However, in other embodiments, the system 10 may be connectable to an external processing unit configured to execute the computer-implemented method 600 for determining a location of the user-borne device 100.

Referring to Figs. 2 and 3, the interaction surface 210 comprising an interaction surface configuration, in which at least two interaction surface portions 210a, 210b are arranged at different portion distances c1, c2 with respect to the magnetometer plane 310, is explained in detail. The interaction surface 210 may be at an interaction surface distance c to the magnetometer plane 310. The interaction surface 210 may comprise a first interaction surface portion 210a and at least one second interaction surface portion 210b. The first interaction surface portion 210a and the at least one second interaction surface portion 210b may be distanced to each other. The first interaction surface portion 210a may be arranged at a first portion distance c1 to the magnetometer plane 310. The second interaction surface portion 210b may be arranged at a second portion distance 210b to the magnetometer plane 310. More specifically, the interaction surface distance c, the first portion distance c1 and/or the second portion distance c2 may be measured orthogonal to the magnetometer plane 310. In some embodiments, two interaction surface portions 210a, 210b may be provided. In embodiments, more than two interaction surface portions may be provided.

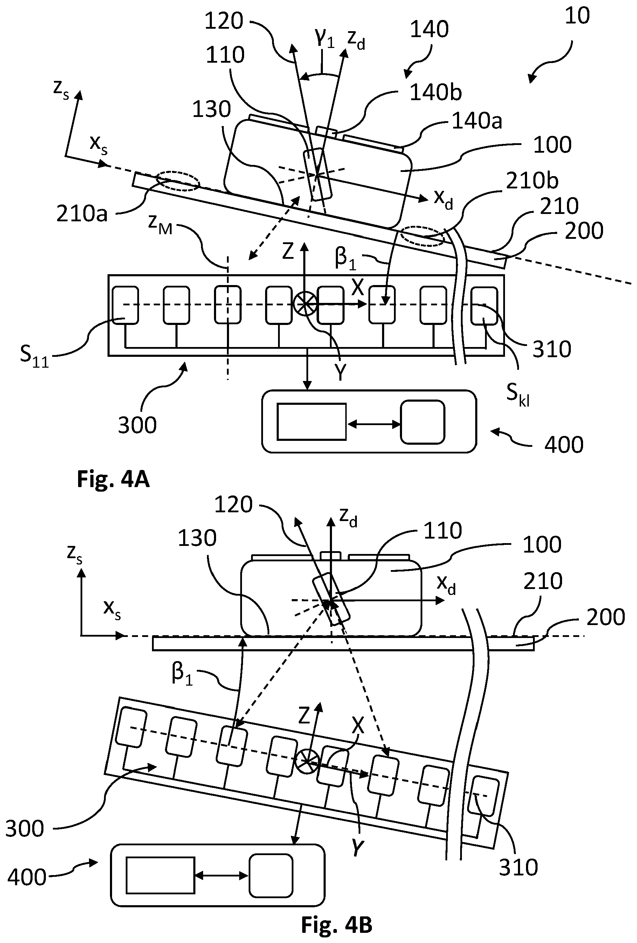

As shown in the embodiment of Fig. 2, the interaction surface 210 may comprise a first interaction surface configuration. In the first interaction surface configuration, the interaction surface 210 may be at least partially inclined with respect to the magnetometer plane 310. Partially inclined means, that at least a partial surface of the interaction surface 210 may be inclined with respect to the magnetometer plane 310, while other parts of the interaction surface 210 may be, e.g., parallel with respect to the magnetometer plane 310. As shown in Figs. 4A and 4B, the inclination of the interaction surface 210 relative to the magnetometer plane 310 may be measured by an inclination angle β₁, more specifically measured in the XZ-plane. The inclination of the interaction surface 210 within the reference coordinate system may be described by a set of interaction surface inclination angles β₁, β₂, β₃. More specifically, the first interaction surface portion 210a and the at least one second interaction surface portion 210b may be arranged on a same portion plane p and at different first and second portion distances c1, c2 with respect to the magnetometer plane 310. In other words, in the first interaction surface configuration, the interaction surface 210 may be defined on a single plane on which the first interaction surface portion 210a and the at least one second interaction surface portion 210b are defined.

Fig. 3 illustrates an interaction surface 210 comprising a second interaction surface configuration. In this embodiment, the interaction surface 210 may be substantially parallel with respect to the magnetometer plane 310. However, the first interaction surface portion 210a may be arranged on a first portion plane p1 and at a first portion distance c1 to the magnetometer plane 310. The at least one second interaction surface portion 210b may be arranged on a second portion plane p2 and at the second portion distance c2 to the magnetometer plane 310. The first portion plane p1 may be distanced to the second portion plane p2. As shown in the embodiment of Fig. 3, the first portion plane p1 may be substantially parallel to the second portion plane p2. In other words, the interaction surface 210 comprising the second interaction surface configuration may be step shaped. The user-borne device 100 may be operated on the first interaction surface portion 210a and/or on the second interaction surface portion 210b (e.g., on a first step or on a second step of the interaction surface 210). During a user operation, the first interaction surface portion 210a may be arranged between the plurality of magnetometers 300 and a user K. The at least one second interaction surface portion 210b may be arranged lateral to the plurality of magnetometers 300 and/or the magnetometer plane 310. An example of such an arrangement may be an electronics device, e.g., a tablet, disposed on a table and comprising a plurality of magnetometers. The first interaction surface portion 210a may be a surface, e.g., a display of the tablet, and the second interaction surface portion 210b may a surface around the tablet within the sensing volume. A user may operate the user-borne device 100 on both interaction surface portions 210a, 210b. The system 10 may be configured to determine the location of the user-borne device 100 relative to the interaction surface 210 comprising both interaction surface portions 210a, 210b, more specifically arranged on different planes p1, p2.

Although not explicitly illustrated in the Figs., a combination of the first interaction surface configuration and the second interaction surface configuration may also be possible. In an example, the interaction surface 210 may comprise the second interaction surface configuration as shown in Fig. 3. However, the first interaction surface portion 210a and/or the at least one second interaction surface 210b may be at least partially inclined with respect to the magnetometer plane 310 as shown in the embodiment of Fig. 2.

The user-borne device 100 may be electrically passive and/or electronically passive. Electrically passive means that the user-borne device 100 does not comprise a power source (e.g., batteries) and/or means to receive power (e.g., wireless power transmission via an inductive coil) for powering an electronic feature of the user-borne device 100. Electronically passive means that no computation or processing occurs (or happens) on the user-borne device 100. The at least one magnetic object 110 may be a permanent magnet. In embodiments, the at least one magnetic object 110 may be configured to generate a non-zero magnetic field. It may comprise a paramagnetic or diamagnetic material. In embodiments, the at least one magnetic object 110 may comprise a ferromagnetic material or a ferrimagnetic material.

The system 10 may be configured to assume a contact between the user-borne device 100 and the interaction surface 210, more specifically considering the specific interaction surface configuration of the interaction surface 210 as described above. The contact and/or the location of the user-borne device 100 relative to the interaction surface 210 can be determined by the system 10 executing the computer-implemented method as described below. During a user operation, the system 10 may be configured to track a movement of the user-borne device 100 relative to the interaction surface 210 over a time period. More specifically the system 10 may be configured to determine a trajectory of the user-borne device 100 relative to the interaction surface 210. In embodiments, the user-borne device 100 may be tracked over a time period comprising multiple time samples. At each time sample, the location of the user-borne device 100 relative to the interaction surface 210 may be determined.

As indicated in Figs. 1 to 4B and 10, the system 10 may comprise an interaction support 200 having an interaction support surface 230. The interaction surface 210 may be at least a partial surface of the interaction support surface 230. The interaction support 200 may not comprise ferromagnetic properties, e.g., ferromagnetic particles. In embodiments, the interaction support 200 may be a furniture, a notebook, an electronics device, a screen, a wall, or a mouse pad. In some embodiments, the interaction support may be a portion, more specifically a lower portion, of a keyboard. The interaction surface 210 may be defined based on a first set of geometric parameters associated with the interaction support 200. More specifically, the type of interaction support 200 may be known, e.g., a notebook or mouse pad. Such an interaction support 200 may be defined by a set of predefined geometric parameters. A partial surface of the interaction support surface 230 may be used as interaction surface 210. Thus, the set of predefined parameters may include data, more specifically geometric data, associated with an interaction surface configuration of the interaction surface 210. As an example, these parameters may be indicative of a position and/or orientation of the interaction surface 210 relative to the reference coordinate system XYZ. In embodiments, the first set of geometric parameters may be determined by interaction surface recognition, which is described below. In embodiments, the user-borne device 100 may be a computer mouse, a keyboard, a toy, a stylus, or a dial. In embodiments, the user-borne device 100 may be an accessory tool, e.g., a ruler.

Referring back to Fig. 1, the system 10 may be configured to track a movement of the at least one magnetic object 110 in at least five degrees of freedom. The at least five degrees of freedom may include a translation of the at least one magnetic object 110 along the first reference axis X, the second reference axis Y and the vertical reference axis Z, a first rotation about a first reference axis X, and a second rotation about a second reference axis Y.

As indicated, e.g., in Figs. 2, 4A and 4B, the at least one magnetic object 110 may comprise a magnetic moment vector 120 and/or a magnetic object position vector associated with a magnetic field of the at least one magnetic object 110. More specifically, the system 10 may be configured to determine the magnetic moment vector 120 and/or the magnetic object position vector based on the magnetic field measurements. The system 10 may be configured to implement a mathematical model associating each measurement of a magnetometer of the plurality of magnetometers 300 with a location (more specifically, a position and/or an orientation) of the at least one magnetic object 110 in the reference coordinate system XYZ. The model may be typically constructed from physical equations of electromagnetism, more specifically equations of magnetostatics. To establish this model, the at least one magnetic object 110 may be approximated by a dipole. Each magnetometer of the plurality of magnetometers 300 may be a vector magnetometer and may be configured to measure the magnetic field in one, two or three dimensions (as already mentioned above). The magnetic moment vector 120 may define a magnetic object orientation and/or a magnetic object strength (e.g., a magnetic field strength of the magnetic object 110) with respect to the reference coordinate system XYZ, more specifically to the magnetometer plane 310. The magnetic object position vector may define a magnetic object position and/or a magnetic object distance with respect to the reference coordinate system XYZ, more specifically to the magnetometer plane 310

As indicated in Fig. 2, the interaction surface 210 may comprise an interaction surface coordinate system. In this interaction surface coordinate system, the interaction surface 210 may be defined by a first interaction surface axis xₛ and a second interaction surface axis yₛ orthogonal to the first interaction surface axis xₛ. A vertical interaction surface axis zₛ may be orthogonal to the interaction surface 210.

A first relative orientation of the at least one magnetic object 110 relative to the interaction surface 210 may be defined based on a first set of inclination angles θ₁, θ₂, θ₃. More specifically, the first set of inclination angles may be defined between the determined magnetic moment vector 120 and the interaction surface 210. In an example as shown in Fig. 2, θ₁ may be measured between the first interaction surface axis xₛ and the magnetic moment vector 120, particularly in the XZ-plane. More specifically, the orientation of the magnetic moment vector 120 relative to the first interaction surface axis xₛ may be defined.

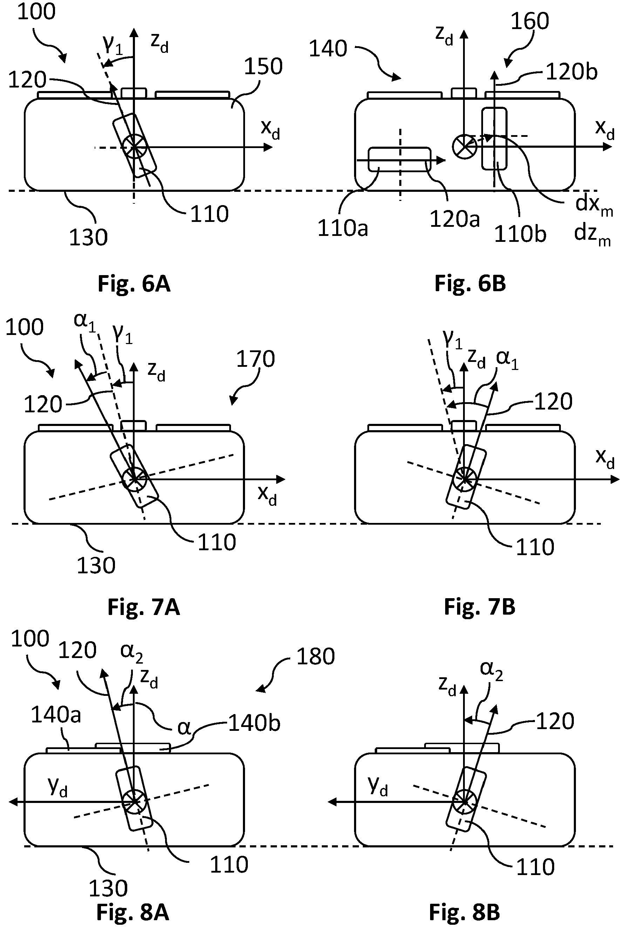

Referring to Figs. 6A to 8B, the user-borne device 100 may comprise a first device axis x_{d}, a second device axis y_{d} orthogonal to the first device axis x_{d}, and a vertical device axis z_{d}. The vertical device axis z_{d} may be orthogonal to a device contact surface or point 130 and/or orthogonal to a plane defined by the first device axis x_{d} and the second device axis y_{d}. The device contact surface or point 130 may be the part of the user-borne device which, during a user operation, may be in contact with the interaction surface 210. In the examples shown in Figs. 6A to 8B, wherein the user-borne device 100 may be a computer mouse, the user-borne device 100 may comprise a contact surface 130 contacting the interaction surface 210. In the example shown in Fig. 2, wherein the user-borne device 100 may be a writing device wherein only a writing tip of the writing device contacts the interaction surface 210 during a user operation, the user-borne device 100 may comprise a contact point 130 contacting the interaction surface 210. The device coordinate system may be defined within a geometric center of the user-borne device 100.

Referring to Fig. 10, a movement of the user-borne device 100 on the interaction surface 10 is shown. In this embodiment, the user-borne device 100 may be a computer-mouse. The user-borne device 100 may comprise a first manipulation feature 140a and a second manipulation feature 140b (which will be described more detailed below). During a user operation, the user-borne device 100 may be moved on the interaction surface 210 from a position x_{d}, y_{d}, to a position dx_{d}, dy_{d}. The system 10 may be configured to track this movement based on the magnetic object location data.

As shown in Figs. 6A to 8B, the user-borne device 100 may comprise a housing 150. The at least one magnetic object 110 may be arranged in the housing 150. In other embodiments, the at least one magnetic object 110 may be coupled to the housing 150. In an initial state of the user-borne device 100, a second relative position and/or a second relative orientation of the at least one magnetic object 110 relative to the user-borne device 100 may be defined based on a second set of geometric parameters. The second set of geometric parameters may define a geometric position and/or a geometric orientation of the at least one magnetic object 110 relative to the user-borne device 100. The second relative orientation of the at least one magnetic object 110 relative to the user-borne device 100 may be defined based on a second set of inclination angles γ₁, γ₂, γ₃. More specifically, the second set of inclination angles γ₁, γ₂, γ₃ may be measured between the magnetic moment vector 120 and the respective axes of the device coordinate system. In an example as shown in Fig. 6A and 7A, γ₁ may be measured between the vertical device axis z_{d} and the magnetic moment vector 120. In an initial state of the user-borne device 100, the magnetic moment vector 120 may be inclined with respect to the vertical device axis z_{d}.

However, in other embodiments e.g., as shown in Fig. 6B, in an initial state of the user-borne device 100, the magnetic moment vector 120 may extend parallel to the vertical device axis z_{d}. In an embodiment, in the initial state of the user-borne device 100, the at least one magnetic object 100 may be arranged in the housing 150 such that the vertical device axis z_{d} extends through the magnetic moment vector 120. However, in other embodiments, in the initial state of the user-borne device 100, the at least one magnetic object 110 may be arranged in the housing 150 such that the magnetic moment vector 120 is parallel but distanced to the vertical device axis z_{d} (see, e.g., Fig. 6B).

Referring to Figs. 6A to 8B, the at least one magnetic object 110 may be movable relative to the user-borne device 100, more specifically wherein the at least one magnetic object 110 may be rotatable and/or translatable relative to the user-borne device 100 (and/or to the housing 150). The user-borne device 100 may be in an initial state, when the at least one magnetic object 110 is in an initial location relative to the user-borne device 100, more specifically to the housing 150. In other words, the user-borne device 100 may be in an initial state, when the at least one magnetic object 110 is not rotated and/or translated relative to the user-borne device 100. As mentioned above, the device coordinate system may be defined in a geometric center of the user-borne device 100. In the initial state, the at least one magnetic object 110 may be inclined and/or distanced with respect to the device coordinate system and/or to the geometric center of the user-borne device 100. The user-borne device 100 may be in an actuated state, when the at least one magnetic object 110 is in an actuated location relative to the initial location (and/or relative to the user-borne device 100 and/or to the housing 150). In other words, the user-borne device 100 may be in an actuated state, when the at least one magnetic object 110 is rotated and/or translated relative to the user-borne device 100, more specifically from the initial location. In the actuated state, the magnetic object orientation and/or the magnetic object position of the at least one magnetic object 110 relative to the device coordinate system may be different compared to the initial state.

Fig. 6B illustrates a translation 160 of the at least one magnetic object relative to the device coordinate system from an initial location to an actuated location. In the example of Fig. 6B, a second magnetic object 110b may arranged in the housing 150, which is translated from an initial location to an actuated location. The second magnetic object 110b is translated in the direction of the first device axis x_{d} and in the direction of the vertical device axis z_{d}. Such a translation 160 from the initial location to the actuated location may be described by dxₘ and dzₘ as indicated in Fig. 6B. Although described only for the second magnetic object 110b, the features described above may analogously apply for the at least one magnetic object 110. In the embodiment shown in Fig. 2, the at least one magnetic object 110 may be fixedly arranged in the housing 150. In this case, the at least one magnetic object 110 may not be translatable 160 and/or rotatable with respect to the user-borne device 100 (and/or the housing 150).

Referring to Figs. 7A to 8B, a rotation of the at least one magnetic object 110 relative to the user-borne device 100 and/or to the housing 150 is shown. In Figs. 7A and 7B, the at least one magnetic object 110 may be rotated by a first rotation 170 from the initial location to an actuated location about the second device axis y_{d}. It should be noted that in the embodiment of Fig. 7A, in the initial state, the at least one magnetic object 110 is inclined by angle γ1 measured between the magnetic moment vector 120 and the vertical device axis z_{d}. In other words, in its initial location, the at least one magnetic object 110 may be arranged inclined with respect to the vertical device axis z_{d}. As shown in Figs. 7A and 7B, the first rotation 170 may be defined by a first rotation angle α₁ measured between the initial location (i.e., an initial position and/or orientation of the magnetic moment vector in the initial state) and the magnetic moment vector 120. In Fig. 7A, the first rotation angle α₁ may comprise a positive value. In Fig. 7B the first rotation angle α₁ may comprise a negative value.

In the embodiment shown in Figs. 8A and 8B, in its initial location and/or state, the at least one magnetic object 110 may comprise a magnetic moment vector 120 which is parallel to the vertical device axis z_{d}. In other words, an inclination angle γ2 about the first device axis x_{d} may be zero. The at least one magnetic object 110 may be rotated by a second rotation 180 from the initial location to an actuated location about the first device axis x_{d}. Such a second rotation 180 may be defined by a second rotation angle α₂ measured between the vertical device axis z_{d} and the magnetic moment vector 120. In Fig. 8A, the second rotation angle α₂ may comprise a positive value, and in Fig. 8B the second rotation angle α₂ may comprise a negative value. Although not explicitly shown in the Figs., it should be understood that a combination of a rotation 170, 180 and/or a translation 160 as described above is also possible. The translation 160 of the at least one magnetic object 110 from the initial location to the actuated location is only shown in the example of Fig. 6B in the direction of the first device axis x_{d} and the vertical device axis z_{d}. However, any combination of translations with respect to the device axes x_{d}, y_{d}, z_{d} may be possible, more specifically along the first device axis x_{d}, the second device axis y_{d} and/or the vertical device axis z_{d}.

The system 10 may be configured to detect the translation 160 and/or rotation 170, 180 of the at least one magnetic object 110 relative to the user-borne device 100. Referring back to Fig. 6B, the user-borne device 100 may comprise at least two magnetic objects 110a, 110b having different relative orientations to each other. The system 10 may be configured to determine magnetic object location data of each of the at least two magnetic objects 110a, 110b. More specifically, the system 10 may be configured to determine a magnetic moment vector 120a, 120b of each of the at least two magnetic objects 110a, 110b. Furthermore, the system 10 may be configured to determine a magnetic object position, a magnetic object orientation and/or a magnetic object distance of each of the at least two magnetic objects 110a, 110b relative to the reference coordinate system XYZ, more specifically the magnetometer plane 310, and/or to the interaction surface 210. As shown in Fig. 6B a first magnetic object 110a may comprise a first magnetic moment vector 120a. A second magnetic object 110b may comprise a second magnetic moment vector 120b. The first magnetic moment vector 120a may be inclined with respect to the second magnetic moment vector 120b. In the example shown in Fig. 6B, the first magnetic moment vector 120a may be substantially orthogonal to the second magnetic moment vector 120b. The first magnetic object 110a may be fixedly coupled to the user-borne device 100. This means that the first magnetic object 110a may not be rotatable and/or translatable with respect to the user-borne device 100. The first magnetic object 110b may be arranged in the housing 150. The second magnetic object 110b may be rotatable and/or translatable relative to the user-borne device 100 and/or to the first magnetic object 110a.

The system 10 may be configured to track a movement of each of the at least two magnetic objects 110a, 110b in at least five degrees of freedom. The system 10 may be configured to track a movement of the at least two magnetic objects 110a, 110b in at least six degrees of freedom. In addition to the at least five degrees of freedom as defined above, the user-borne device 100 comprising at least two magnetic objects 110a, 110b allows to determine a third relative position and/or a third relative orientation of the two at least two magnetic objects 110a, 110b with respect to each other. Each magnetic object of the at least two magnetic objects 110a, 110b may comprise a magnetic field which may differ in strength and/or its shape. The system 10 may be configured to differentiate between the magnetic objects based on the magnetic field strength and/or the magnetic field shape.

As indicated in Figs. 1 to 5, the user-borne device 100 may comprise at least one manipulation feature 140, more specifically coupled to the housing 150. The at least one manipulation feature 140 may be translatable and/or rotatable with respect to the user-borne device 100, more specifically to the housing 150. The at least one magnetic object 110 may be coupled to the at least one manipulation feature 140. More specifically, the at least one magnetic object 110 may be operationally, e.g., mechanically, coupled to the at least one manipulation feature 140. A translation and/or rotation of the at least one manipulation feature 140 relative to the housing 150 may cause a translation and/or a rotation of the at least one magnetic object 110 relative to the housing 150. The at least one manipulation feature 140 may be actuated by a user. in an initial state of the user-borne device 100, the at least one manipulation feature 140 and/or the at least one magnetic object 110 may be in the initial location. In an actuated state of the user-borne device 100, the at least one manipulation feature 140 and/or the at least one magnetic object 110 may be in the actuated location. In other words, in case the at least one manipulation feature 140 is not actuated by user, the user-borne device may be in the initial state. More specifically, in the initial state, the at least one manipulation feature 140 and/or the at least one magnetic object 110 may be in the initial location. In case the at least one manipulation feature 140 is actuated by user, the user-borne device 100 may be in the actuated state. More specifically, in the actuated state, the at least one manipulation feature 140 and/or the at least one magnetic object 110 may be in the actuated location. Referring to the examples shown in Figs. 7A and 7B, an actuation of the at least one manipulation feature 140 may lead to the first rotation 170 about the second device axis y_{d} as described above. Depending on a direction of an actuation of the at least one manipulation feature 140, the first rotation angle α₁ may have the positive value or the negative value. Additionally or alternatively, referring to Figs. 8A and 8B, an actuation of the at least one manipulation feature 140 may lead to the second rotation 180 about the first device axis x_{d} as described above. Depending on a direction of an actuation of the at least one manipulation feature 140, the second rotation angle α₂ may have the positive value or the negative value. Referring to Fig. 6B, an actuation of the at least one manipulation feature may lead to a translation 160 of the at least one magnetic object 110 along the first device axis x_{d}, the second device axis y_{d}, and/or the vertical device axis z_{d}.

The user-borne device 100 may comprise a biasing element (not shown), configured to urge the at least one manipulation feature 140 and/or at least one magnetic object 110 from the actuated location to the initial location, more specifically when the at least one manipulation feature 140 is not actuated. More specifically, when a user actuates (e.g., applies a force on) the at least one manipulation feature 140, the at least one manipulation feature 140 and at least one magnetic object 110 may be moved from the initial location to the actuated location. In this case, the biasing element may be biased. When a user releases the force on the at least one manipulation feature 140, the at least one manipulation feature 140 and the at least one magnetic object 140 may be urged from the actuated location to the initial location.

In embodiments, the user-borne device 100 may comprise a plurality of manipulation features 140a, 140b, 140c, 140d. The at least one magnetic object 110 may be coupled to one or more manipulation features 140a, 140b, 140c, 140d of the plurality of manipulation features 140a, 140b, 140c, 140d. The user-borne device 100 may comprise equal or less magnetic objects 110 than manipulation features 140. In embodiments, the at least one magnetic object 110 may be coupled to at least two manipulation features 140b, 140c, 140d of the plurality of manipulation features 140a, 140b, 140c, 140d. In an embodiment, the user-borne device 100 may comprise a plurality of magnetic objects 110 and the user-borne device 100 may comprise a plurality of manipulation features 140a, 140b, 140c, 140d. Each magnetic object of the plurality of magnetic objects 110 may be coupled to one or more manipulation features of the plurality of manipulation features 140a, 140b, 140c, 140d.

The at least one manipulation feature 140 may be associated with at least one trigger event. The system 10 may be configured to determine the respective trigger event based on a translation and/or rotation of the at least one magnetic object 110 relative to the user-borne device 100 as described above, more specifically caused by a translation of the at least one manipulation feature 140 being operationally coupled to the at least one magnetic object 110. More specifically, the system 10 may be configured to determine a position and/or rotation deviation between the initial location and the actuated location. In other words, a specific translation and/or rotation of the at least one magnetic object 110 relative to the user-borne device 100 may be detectable by the system 10. Based on the detected specific translation and/or rotation, the system 10 may be configured to transform this movement to a trigger event associated with the translation and/or rotation. In an example, the system 10 may be coupled to a database. The database may comprise data associating at least one trigger event with a specific translation and/or rotation of the at least one magnetic object 110 from the initial location to the actuated location. The system 10 may be configured to transmit to and/or receive data from the database. In the embodiments shown in Figs. 7A and 7B, the first rotation 170 may be associated with a first trigger event. In the embodiments shown in Figs. 8A and 8B, the second rotation 180 may be associated with a second trigger event. The respective trigger event may be, e.g., a click function, a scroll function, a selection function, and/or a keyboard function. In case a plurality of magnetic objects is provided, additional trigger events may be determined based on a rotation and/or translation of the magnetic objects relative to each other and detectable by the system 10. The at least one trigger event may be initiated by a user manipulation of the user-borne device 100 (e.g., an actuation and/or a release of the actuation), more specifically the electrically and/or electronically user-borne device 100, within the sensing volume M. The at least one trigger event may cause an action and/or may be used to control an action in a digital environment (i.e., an environment which is controlled by a computer or a network of computers), more specifically a virtual environment, based on a user input. More specifically, the at least one trigger event may implement a user input on the user-borne device 100 as an action in the digital environment, e.g., a virtual environment. For instance, the at least one user-borne device 100 may be used together with an electronics device 700, e.g., a tablet, a cell phone, a laptop, a computer, a virtual reality (VR) set or a television. The at least one trigger event may cause an action on the electronics device 700 and/or may be used to control an action on the electronics device 700 based on a user input on the user-borne device 100.

As mentioned above, the at least one trigger event may be a scroll event and/or a click event. A scroll event and/or a click event may be applied to various different application fields. A scroll event may trigger a scroll action in a digital environment, more specifically a virtual environment, based on a user input, e.g., "scroll up" and "scroll down" on a display. A scroll event may cause or provide a control of a rotational and/or translational movement of a virtual object in a virtual environment that is associated with a user input. For instance, a scroll event may trigger a scroll action including scrolling of files or data, a rotational or translational movement of the virtual object associated with a selection of a choice from a plurality of choices. The scroll action may also include rotating a body in a virtual environment and/or changing a perspective in a virtual environment. Furthermore, a scroll action may include one or more of moving a cursor in two opposing directions (e.g., horizontal or vertical on an output device), moving a displayed element (e.g. a page, a cursor), which may be controlled by the user-borne device 100, a step in a direction, flipping through a menu, flipping through a selection list, or adjusting (e.g. increasing or decreasing) a parameter (e.g. a setting or a configuration). A click event may trigger a click action (more specifically of a virtual object) in a digital environment, more specifically a virtual environment, based on a user input. A click event may include, e.g., a selection of an object (like a button, a file, an icon or another object), a selection of an item, a selection of a list, a selection of an item on a list. A click event may trigger a following action. A click event may trigger an action that provides additional information and/or properties of an object, an item or a text (e.g., letter, word, phrase) selected. A click event may trigger a single click action (or left click action), a double click action, a triple click action, a right click action and/or a click-and-drag action within a virtual environment. A single click action may refer to selection of an object within a virtual environment. A double click action may open a file or execute a program within a virtual environment. A click-and-drag action may include clicking, holding and moving an object, e.g., which may be used to highlight or drag-select a text or an object. A triple click action may be used to select a paragraph of a text. A right click action may perform a special action, e.g., opening a list with additional information and/or properties for a selected object as mentioned above. The action that is triggered by the click event depends on the user's input on the user-borne device 100. For example, the click event may cause a double-click action when a user provides two quick and successive inputs on the user-borne device 100. The above-mentioned features enables various new application fields for the user-borne device 100, for example a computer-mouse, a keyboard, a dial, a mouse scroll element (e.g. a wheel), a joystick, a control for an electronic device (e.g. an audio control or a visual control), a control of software settings or visualizations (e.g. graphic software or design software), or a control of a computer game.

In an example as shown in Figs. 4A and 4B, a first manipulation feature 140a may be provided and a second manipulation feature 140b may be provided. Each of the first and second manipulation features 140a, 140b may be operationally coupled to the at least one magnetic object 110. In this example, the user-borne device 100 may be, e.g., a computer mouse. The first manipulation feature 140a may be a click manipulation feature and the second manipulation feature 140b may be a scroll manipulation feature. Actuating the first manipulation feature 140a may lead to the first rotation 170 of the at least one magnetic object 110 (see, e.g., Fig. 7A). Depending on the direction of the actuation, the first rotation angle α₁ may comprise a positive value or a negative value. The system 10 may be configured to detect the first rotation angle α₁ and may transform this rotation into a click event comprising a first click event or a second click event, depending on the first rotation angle value. In other words, the first rotation 170 may be associated with a click event. In case the first rotation angle α₁ has a positive value, this may be associated with a first click event. In case the first rotation angle α₁ has a negative value, this may be associated with a second click event. The first click event may trigger a left click action, a double click action, a triple click action, and/or a click-and-drag action as described above. The second click event may trigger the right click action as described above. Actuating the second manipulation feature 140b may lead to the second rotation 180 of the at least one magnetic object 110 (see, e.g., Fig. 8A). Depending on the actuation, the second rotation angle α₂ may comprise a positive value or a negative value. The system 10 may be configured to detect the second rotation angle α₂ and may transform this rotation into a scroll event. The scroll event may comprise a first scroll event or a second scroll event. The respective scroll event may depend on the second rotation angle value. The second rotation 180 may be associated with a scroll event. In case the second rotation angle α₂ has a positive value, this may be associated with a first scroll event (e.g.. a "scroll up"). In case the second rotation angle α₂ has a negative value, this may be associated with a second scroll event (e.g., a "scroll down").

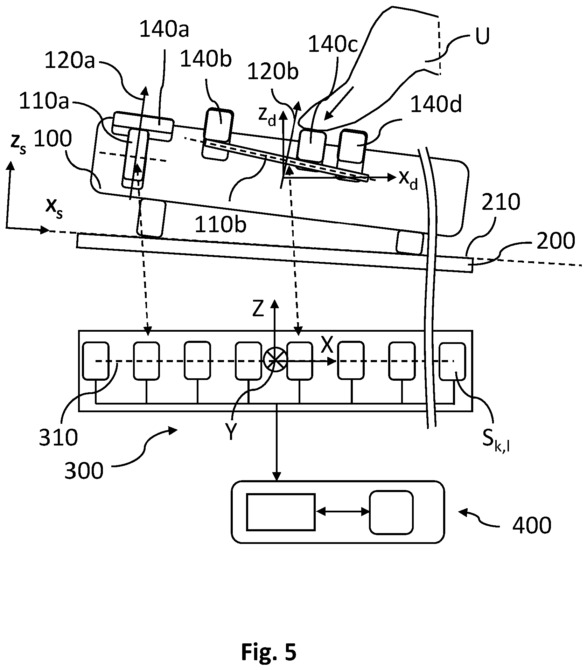

Referring to the embodiment shown in Fig. 5, the user-borne device 100 may be a keyboard. The manipulation feature 140 may be coupled to a keyboard button. More specifically, the keyboard may be electrically passive and/or electronically passive. The at least one magnetic object 110 may be coupled to two manipulation features 140. In another embodiment, the at least one magnetic object 110 may be coupled to four manipulation features. As an example, the user-borne device may comprise 76 manipulation features. In a first embodiment, the user-borne device 100 may comprise 38 magnetic objects, each magnetic object being coupled to two manipulation features. In another embodiment, the user-borne device 100 may comprise 19 magnetic objects, each magnetic object being operationally coupled to four manipulation features. The at least one magnetic object 110 may comprise a first side and a second side. The first side may be coupled to a first manipulation feature and the second side may be coupled to a second manipulation feature. In embodiments, the at least one magnetic object 110 may further comprise a third side and a fourth side. The third side may be coupled to a third manipulation feature and the fourth side may be coupled to a fourth manipulation feature. In the embodiment shown in Fig. 5, a first magnetic object 110a may be coupled to a first manipulation feature 140a. A second magnetic object 110b may be coupled to a second manipulation feature 140b, a third manipulation feature 140c and a fourth manipulation feature 140d. Based on the respective actuation of the manipulation features 140b, 140c, 140d, the second magnetic object 110b (i.e., the at least one magnetic object 110) may be in a specific magnetic object location, a magnetic object position and/or a magnetic object distance relative to the reference coordinate system XYZ and/or to the interaction surface 210. The system 10 may be configured to determine these parameters and associate the specific magnetic object location, the magnetic object position and/or the magnetic object distance with a specific trigger event. Such a trigger event may be, for example, the output of a letter associated with the respective manipulation feature 140b, 140c, 140d.

In embodiments, the user-borne device 100 may comprise only one magnetic object 110b and a plurality of manipulation features 140b, 140c, 140d, wherein the magnetic object 110b may be coupled to each of the plurality of manipulation features 140b, 140c, 140d. In this embodiment, the rotation and/or translation of each manipulation feature may lead to a specific location (incl. position and/or orientation) of the only one magnetic object 110b relative to the reference coordinate system XYZ and/or to the interaction surface 210. The respective specific locations of the only one magnetic object 110 may be associated with the respective manipulation features.

Referring to Figs. 1 to 3, the system 10 may comprise at least one output device 510, wherein the at least one output device 510 may be configured to reproduce, more specifically to visually reproduce, the user-borne device 100 as a virtual object. In embodiments, the output device 510 may be a visual screen or display. The system 10 may comprise an electronics device 500. The output device 510 may be integrated in the electronics device 500. In embodiments, the electronics device may be a tablet, a cell phone, a laptop, a computer, a virtual reality (VR) set or a television. In embodiments, the processing unit 400 may be integrated in the electronics device 500. Furthermore, the electronics device 500 may comprise a user interface configured to interact with a user U and/or receive a user input. In an embodiment, the user interface may be integrated into the output device 510. The plurality of magnetometers 300 may be configured to receive data from and/or transmit data to the processing unit 400 and/or the external processing unit. The system 10 may comprise a data storage connected to the processing unit 400. The data storage may comprise a primary data storage, e.g., a RAM, and a secondary data storage. The data storage may be integrated in and/or connected to the electronics device 500.

In embodiments, the electronics device 500 may be a VR set, more specifically an XR headset which may be a device worn on a user's head and configured to allow a user to experience virtual environments in real life (virtual reality environment, or VR environment). In an embodiment, the user-borne device 100 may be represented or reproduced (e.g., displayed) as a virtual object in the VR environment allowing the user to recognize where the user-borne device 100 is located. A plurality of magnetometers 300 may be provided creating a sensing volume M in which the user-borne device 100 is operated. The magnetic object location data as described herein may be indicative of a magnetic object position and/or a magnetic object orientation associated with the at least one magnetic object 110 relative to the reference coordinate system XYZ, more specifically to the magnetometer plane 310. The user-borne device location may be determined based on the magnetic object location data and relative to the interaction surface 210. The reference coordinate system XYZ may be fixed in the VR environment. A position and/or orientation of the at least one magnetic object 110 and/or the user-borne device 100 may be computed relative to the VR set, more specifically to the XR headset, and may be represented, particularly displayed, to the user via the XR headset. In embodiments, the reference coordinate system XYZ may be dynamically evaluated from a tracking of VR environment of the XR headset. In some embodiments, the interaction surface location may be computed based on XR headset data, more specifically wherein the XR headset may generate the first set of geometric parameters associated with the interaction surface 210. In embodiments, it may also be possible to provide an additional tracking system being fixed to the plurality of magnetometer 300 such as IR tracking, electromagnetic tracking and/or camera-based tracking. Scroll event and/or click event may be generally denoted as a trigger event and the caused action may also be represented in the VR environment more specifically may be displayed to a user U via a display arranged in the XR headset. The representation in the VR environment may be done by changing a rendering parameter of the user-borne device 100, for instance color or light, and/or adding a specific sound. In some embodiments, the interaction surface 210 may be modeled in the VR environment, displayed to a user via the XR headset and/or used as an input to represent an interaction between the user-borne device 100 and the interaction surface 210 within the VR environment (e.g., representing the user-borne device 100 being operated on the interaction surface 210 within the VR environment). In some embodiments, the user-borne device location and/or the interaction surface location (more specifically, including an interaction surface 210 comprising an interaction surface configuration as described) may be represented in the VR environment. More specifically, generating magnetic object location data 620, determining a user-borne device location 630 relative to the interaction surface 210, and/or representing 680 the user-borne device 100 on an output device 510 as described may be done with respect to the interaction surface 210 (i.e., the interaction surface configuration and/or the at least one output device 510 being represented virtually in the VR environment. Thus, an interaction of the user-borne device 100 with respect to the interaction surface 210 and/or the at least one output device 510 (i.e., based on a user manipulation within the sensing volume) may be represented in the VR environment and may be displayed to a user U via the XR headset.

The plurality of magnetometers 300 may be electronically (e.g., via wires or a data bus) or wirelessly connected to the processing unit 400, the external processing unit and/or to the electronics device 500. In embodiments, the plurality of magnetometers 300 may be integrated in a wall, a furniture, a notebook, an electronics device 500, a screen, and/or a mouse pad. In some embodiments, the plurality of magnetometers 300 may also be integrated in the keyboard.

In case the plurality of magnetometers 300 is arranged in a wall, the interaction surface 210 may be a screen or display placed in front of the plurality of magnetometers 300.

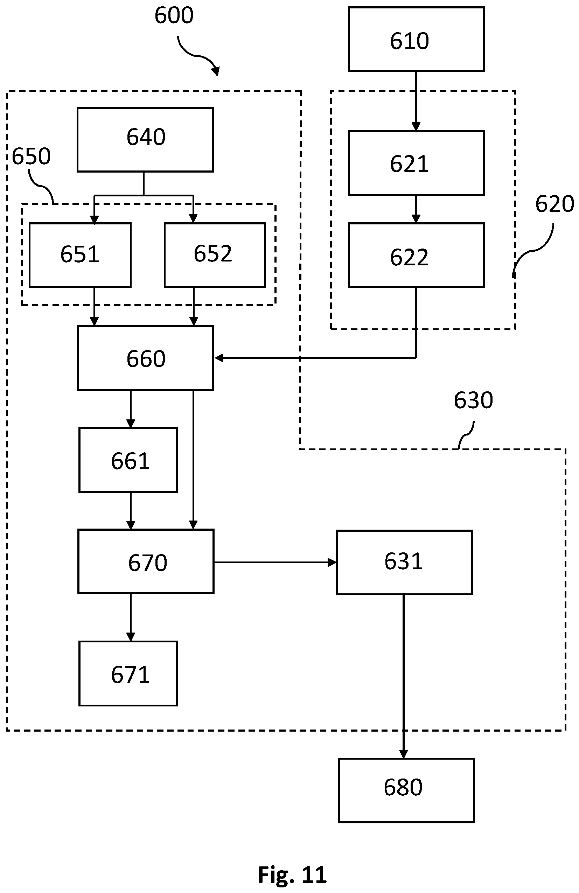

As already described above, the system 10 is configured to execute a computer-implemented method for determining a location of a user-borne device 100. The computer-implemented method will now be explained in detail. Fig. 11 schematically illustrates a computer-implemented method 600 for determining a location of a user-borne device 100 according to an aspect of the present disclosure. More specifically, a computer-implemented method 600 for determining a location of an electrically and/or electronically passive user-borne device may be provided. The computer-implemented method 600 may be suitable for determining and/or tracking a location of a user-borne device 600 within a sensing volume.

As shown in Fig. 11, the computer-implemented method 600 comprises collecting magnetic field measurements 610 associated with at least one magnetic object 110 with a plurality of magnetometers 300. The plurality of magnetometers 300 is configured to create a sensing volume and is associated with a magnetometer plane 310. The at least one magnetic object 110 is coupled to a user-borne device 100. More specifically, the user-borne device 100 may comprise the at least one magnetic object 110. The user-borne device 100 may be operable on an interaction surface 210 defined within the sensing volume. The computer-implemented method further comprises generating magnetic object location data 620 associated with the at least one magnetic object 110 based on the collected magnetic field measurements. Furthermore, the computer-implemented method 600 comprises determining a user-borne device location 630 relative to the interaction surface 210 based on the magnetic object location data, wherein the interaction surface 210 comprises an interaction surface configuration in which at least two interaction surface portions 210a, 210b are arranged at different portion distances c1, c2 with respect to the magnetometer plane 310. The interaction surface configuration has already been described in detail above. As the determination of the location of the user-borne device 100 relative to the interaction surface 210 by the computer-implemented method considers an interaction surface configuration in which at least two interaction surface portions 210a, 210b are arranged at different portion distances c1, c2 with respect to the magnetometer plane 310, the location of a user-borne device 100 can be determined and/or tracked with increased accuracy. Furthermore, a representation, more specifically a reproduction, of the user-borne device 100 as a virtual object can be provided with increased accuracy and reliability. Any manufacturing tolerances with respect to the plurality of magnetometers 300 and the interaction surface 210, specific magnetometer arrangements, uneven interaction surfaces and/or specific arrangements of interaction surfaces can be considered and/or compensated.

The computer-implemented method 600 may further comprise defining the reference coordinate system XYZ and/or the magnetometer plane 310 as described above. The user-borne device location 630 may comprise a device position and/or a device orientation of the user-borne device 100 relative to the interaction surface 210. The collected magnetic field measurements may be indicative of a magnetic field associated with the at least one magnetic object 110.

Generating magnetic object location data 620 may comprise generating magnetic field measurement data 621 based on the collected magnetic field measurements. The magnetic field measurement data may be indicative of a magnetic field position, a magnetic field orientation and/or a magnetic field strength relative to the reference coordinate system XYZ. The magnetic field strength may be larger than 100 A/m. In embodiments, the magnetic moment of the at least one magnetic object may be larger than 0,01 A . m².

Generating magnetic object location data 620 may comprise processing magnetic field measurement data 622 to relate magnetic field measurement data to magnetic object location data. The magnetic object location data may be indicative of a magnetic object position and/or a magnetic object orientation associated with the at least one magnetic object 110 relative to the reference coordinate system XYZ, more specifically to the magnetometer plane 310. The processed magnetic field measurement data may include a magnetic moment vector 120 and/or a magnetic object position vector of the at least one magnetic object 110. As already described above, the magnetic moment vector 120 may be indicative of a magnetic object orientation with respect to the reference coordinate system XYZ, more specifically to the magnetometer plane 310. The magnetic object position vector may be indicative of a magnetic object position and/or a magnetic object distance with respect to the reference coordinate system XYZ, more specifically to the magnetometer plane 310. The magnetic moment vector 120 and/or a magnetic object position vector may be calculated by applying a mathematical model. The model may be constructed from physical equations of electromagnetism. In this model, the at least one magnetic object 120 may be approximated as a dipole. The magnetic moment vector 120 may be indicative of a strength of the magnetic field, which may vary based on the distance to the plurality of magnetometers, and/or a magnetic object orientation.

As shown in Fig. 11, determining a user-borne device location 630 may comprise determining an interaction surface location 640. The interaction surface location may be indicative of an interaction surface position, an interaction surface orientation and/or an interaction surface distance c relative to the reference coordinate system XYZ, more specifically to the magnetometer plane 310. As mentioned above, the interaction surface location 640 may be defined based on a first set of geometric parameters associated with the interaction surface 210. More specifically, the first set of geometric parameters may be indicative of a geometry of the interaction surface 210. The set of geometric parameters may include a point on the interaction surface 210 and a normal vector (thereby defining an infinite surface), at least three coplanar points defining a finite surface, a center point, a radius and a normal vector in case of a disk-shaped surface, and/or two axes defined on the surface and a point (e.g., two dimensions may define a rectangular surface). The interaction surface configuration as described above may be based on the first set of geometric parameters. The interaction surface 210 may comprise a set of partial surfaces with different orientations and/or positions to each other. The computer-implemented method 600 may determine the interaction surface 210 based on the first set of geometric parameters. This allows to determine a user-borne device location even on any surface, even complex surfaces (e.g., by polygonal shapes of the surfaces, curved surfaces).

The first set of geometric parameters may comprise predefined geometric parameters associated with the interaction surface 210. As outlined above, the interaction support 200 may comprise an interaction support surface 230. The interaction surface 210 may be at least a partial surface of the interaction support surface 230. Defining the interaction surface 210 may comprise receiving input data, more specifically from a database, regarding a specific type of an interaction support 200 on which the interaction surface 210 is defined. The specific type of interaction support 200 may comprise predefined geometric parameters associated with the interaction support 200. The specific predefined geometric parameters may be stored in a database associated the type of interaction support 200 with geometric parameters. In embodiments, receiving input data may comprise instructing a user to select an interaction support 200 to be used together with the user-borne device 100. In other embodiments, receiving input data may comprise deriving a set of geometric parameters associated with the interaction surface 210 from a database.

In embodiments, the first set of geometric parameters may be determined based on an interaction surface recognition. The interaction surface recognition may be a calibration procedure or an automatic recognition procedure. As an example, for calibration, the computer-implemented method 600 may instruct a user via a user interface to dispose the user-borne device 100 on at least three different points on the interaction surface 210, wherein the at least three points may not be aligned (preferably the three points may form an equilateral triangle). Based on these points, the computer-implemented method 600 may compute a normal of the interaction surface 210. More specifically, an interaction surface position and/or an interaction surface orientation may be determined by computing the average of the at least three points. Automatic recognition procedure may be based on automatic calculation of the first set of geometric parameters based on a normal vector or on a set of normal vectors.

Determining a user-borne device location 630 may comprise deriving an interaction surface configuration 650 of the interaction surface 210 based on the interaction surface location. The interaction surface configured may be indicative of the interaction surface 210 being at least partially inclined with respect to the magnetometer plane 210, or, of the interaction surface 210 being substantially parallel with respect to the magnetometer plane 310. In embodiments, determining a user-borne device location 630 may comprise determining a first interaction surface configuration 651 indicative of the interaction surface 210 being at least partially inclined with respect to the magnetometer plane 310, more specifically when the at least two interaction surface portions 210a, 210b are arranged on a same portion plane p and at different distances c1, c2 with respect to the magnetometer plane 310. More specifically, the first interaction surface configuration may be defined as described above. The computer-implemented method 600 may comprise determining that the first interaction surface portion 210a and the at least one second interaction surface portion 210b are arranged on a same portion plane p and at different distances c1, c2 to the magnetometer plane 310. In embodiments, determining a user-borne device location 630 may comprise determining a second interaction surface configuration 652 indicative of the interaction surface 210 being substantially parallel with respect to the magnetometer plane 310, more specifically when a first interaction surface portion 210a of the interaction surface 210 is arranged on a first portion plane p1 and at a first portion distance c1 with respect to the magnetometer plane 310, and when at least one second interaction surface portion 210b of the interaction surface 210 is arranged on a second plane p2 and at a second portion distance p2 with respect to the magnetometer plane 310. More specifically, the second interaction surface configuration may be defined as described above. More specifically, the computer-implemented method 600 may comprise determining that the first interaction surface portion 210a is arranged on a first portion plane p1 and that the at least one second interaction surface portion 210b is arranged on a second portion plane p2. The first portion plane p1 may be substantially parallel to the second portion plane p2 but may be distanced to the first portion plane p1. In other words, in this embodiment the interaction surface 210 may be step shaped. The computer-implemented method 600 may comprise determining that the at least one second interaction surface portion 210b may be arranged lateral to the plurality of magnetometers 300 and/or to the magnetometer plane 310. The computer-implemented method 600 may comprise determining that the first interaction surface portion 210a may be arranged above the magnetometer plane, i.e., on a side of the magnetometer plane which, during a user operation, faces towards a user. This means that, during a user operation, the first interaction surface portion 210a may be arranged between the magnetometer plane 310 and a user. In other embodiments, determining a user-borne device location 630 may comprise determining a combination of the first interaction surface configuration and the second interaction surface configuration as described above.

Determining a user-borne device location 630 may comprise determining a first magnetic object location 660. The first magnetic object location may be indicative of a first relative position and/or a first relative orientation of the at least one magnetic object 110 relative to the interaction surface 210 as described above. Determining a first magnetic object location 660 may be based on the magnetic object location data and the interaction surface location. In embodiments, determining a first magnetic object location 660 may further comprise determining a first relative distance 661 between the at least one magnetic object 110 and the interaction surface 210. The first relative distance may be measured from the interaction surface 210 to the first relative position, more specifically of the at least one magnetic object 110. The first relative distance may be measured orthogonal to the interaction surface 210. This may be done by defining a virtual normal vector on the interaction surface 210 to the at least one magnetic object 110.

In embodiments, determining a first magnetic object location 660 may comprise determining, based on the first relative position as described above, whether the at least one magnetic object 110 is located on a side of the interaction surface 110 facing towards a user during operation of the user-borne device 100, or, on a side of the interaction surface 110 facing away from a user during operation of the user-borne device 100. In other words, it may be determined on which side of the interaction surface 210 the at least one magnetic object 110 is operated during a user operation. More specifically, based on the algebraic sign of the virtual normal vector from the interaction surface 210 to the relative position of the at least one magnetic object 110 it may be determined on which side of the interaction surface 210 the at least one magnetic object is operated.

Determining a first magnetic object location 660 may comprise deriving a magnetic moment vector 120 from the magnetic object location data, and determining a first virtual intersection point I₁ of the magnetic moment vector 120 and the interaction surface 210. This may be done by calculating an intersection of the magnetic moment vector 120 and the interaction surface 210. As described above, the first relative orientation may be defined by a first set of inclination angles θ₁, θ₂, θ₃ measured between the interaction surface 210 and the magnetic moment vector 120, more specifically measured between the axes of the interaction surface coordinate system and the magnetic moment vector 120. In case the user-borne device 100 is a writing device (e.g., a stylus) as shown in Fig. 2, calculating the first set of inclination angles θ₁, θ₂, θ₃ may be used to assume the contact point 130 of the user-borne device 100 on the interaction surface 210.

Determining a user-borne device location 630 may further comprise determining a second magnetic object location 670 indicative of a second relative position and/or a second relative orientation of the at least one magnetic object 110 relative to the user-borne device 100. Determining a second magnetic object location 670 may be based on the first magnetic object location 660 and a second set of geometric parameters as described above. In embodiments, the second set of geometric parameters may comprise predefined geometric parameters indicative of a geometric position and a geometric orientation of the at least one magnetic object 100 relative to the user-borne device 100, more specifically in an initial state of the user-borne device 100 (as described above in detail).

Determining a second magnetic object location 670 may comprise detecting a position and/or orientation deviation 671 of the second relative orientation and/or the second relative position caused by a translation and/or a rotation of the at least one magnetic object 110 relative to the user-borne device 100. More specifically, in this case the user-borne device 100 may be in an actuated state. The position and/or orientation deviation may refer to the translation 160 and/or rotation 170, 180 (e.g., first rotation and second rotation) of the at least one magnetic object 110 from the initial location to the actuated location as described in detail above. Determining a second magnetic object location 670 may comprise, in response to detecting the position and/or orientation deviation, determining at least one trigger event associated with the position and/or orientation deviation. In the examples shown in Figs. 7A to 8B, the orientation deviation (i.e., the first rotation and/or the second rotation) may be detected. As an example, based on the orientation deviation being indicative of the first rotation 170, a first trigger event may be determined. Based on the orientation deviation being indicative of the second rotation 180, a second trigger event may be determined.

Determining a user-borne device location 630 may comprise assuming a user-borne device contact 631 between the user-borne device 100 and the interaction surface 210. Assuming a user-borne device contact 631 between the user-borne device 100 and the interaction surface 210 may be based on the first magnetic object location 660 and based on the second magnetic object location 660. As outlined above, the user-borne device 100 may comprise a vertical device axis z_{d}. Assuming a user-borne device contact 631 may comprise determining a second virtual intersection point I₂ between the vertical device axis z_{d} and the interaction surface 210, e.g., as shown in Fig. 3. More specifically, the distance between the contact surface or point 130 and the at least one magnetic object 110 may be known based on the second magnetic object location, more specifically being indicative of the magnetic object location relative to the device coordinate system and/or to a geometry of the user-borne device 100.

The computer-implemented method 600 may further comprise representing 680, more specifically reproducing, the user-borne device 100 as virtual object on at least one output device 510. A movement of the virtual object on the output device 510 may be based on a virtual reproduction of the location of the user-borne device 100 relative to the interaction surface 210, more specifically based on the determined user-borne device location.

The computer-implemented method 600 may further comprise initializing the plurality of magnetometers 300 and the user-borne device 100, more specifically when a user starts a user operation. In embodiments, the user-borne device 100 may be tracked over a time period comprising multiple time samples. At each time sample, the computer-implemented method 600 may comprise determining the user-borne device location relative to the interaction surface 210 and may store the determined location for each time sample.

In embodiments, the computer-implemented method 600 may further comprise applying a filter for filtering the determined user-borne device location. Magnetic and electronic noise, as well as environmental variations may lead to non-smooth location determinations over time. Based on the filtering, a smooth location trajectory of the user-borne device relative to the interaction surface may be achieved. The filter may be a low-pass filter or a Kalman filter, more specifically an extended Kalman filter or an unscented Kalman filter.

According to an aspect of the present disclosure, a computer system may be configured to execute the computer-implemented method 600 as described above. According to another aspect of the present disclosure a computer program may be configured to execute the computer-implemented method 600 as described above. Furthermore, a computer-readable medium or signal storing the computer program may be provided.

More specifically, the described computer-implemented method 600 can comprise or be executable via a computer or a network of computers, the computer or network of computers comprising at least one processing unit (e.g., a processor) and at least one data storage (i.e., memory). The described procedural logic may be held in the form of executable code in at least one data storage and executed by the at least one processing unit. The systems and subsystems may send data to the at least one processing unit and, in examples, they may also receive instructions from the at least one processing unit. The processing unit may thereby direct user-initiated and/or automatically generated queries to the system 10. The system 10 is not limited to a particular hardware environment. Thus, distributed devices coupled via a network may perform the techniques described herein. The disclosure also includes electrical signals and computer-readable media defining instructions that, when executed by a processing unit, implement the techniques described herein. As described above, the system 10 may comprise at least one database. Alternatively, or in addition, the system 10 may access a database in a cloud (via a communication interface). The system 10 may comprise a (at least one) communication interface to couple to plurality of magnetometers, the processing unit and/or the database. The communication interface may comprise one or more of a network, internet, a local area network, a wireless local area network, a broadband cellular network, and/or a wired network. In examples, the system 10 may couple to one or more features via a server hosted in a cloud.

## Claims

1. A computer-implemented method (600) for determining a location of a user-borne device (100), comprising:
- collecting magnetic field measurements (610) associated with at least one magnetic object (110) with a plurality of magnetometers (300), wherein the plurality of magnetometers (300) is configured to create a sensing volume and is associated with a magnetometer plane (310),
wherein the at least one magnetic object (110) is coupled to a user-borne device (100), and
wherein the user-borne device (100) is operable on an interaction surface (210) defined within the sensing volume,
- generating magnetic object location data (620) associated with the at least one magnetic object (110) based on the collected magnetic field measurements, and
- determining a user-borne device location (630) relative to the interaction surface (210) based on the magnetic object location data, wherein the interaction surface (210) comprises an interaction surface configuration in which at least two interaction surface portions (210a, 210b) are arranged at different portion distances (c1, c2) with respect to the magnetometer plane (310), wherein determining the user-borne device location (630) comprises:
determining an interaction surface location (640), wherein the interaction surface location is indicative of an interaction surface position, an interaction surface orientation and/or an interaction surface distance (c) relative to a reference coordinate system (XYZ) comprising a first reference axis (X) and a second reference axis (Y) being defined on the magnetometer plane (310) and being orthogonal to each other.

2. The computer-implemented method (600) according to claim 1, wherein generating magnetic object location data (620) comprises:
generating magnetic field measurement data (621) based on the collected magnetic field measurements, wherein the magnetic field measurement data is indicative of a magnetic field position, a magnetic field orientation and/or a magnetic field strength relative to the reference coordinate system (XYZ), and more specifically,
processing magnetic field measurement data (622) to relate magnetic field measurement data to magnetic object location data, wherein magnetic object location data is indicative of a magnetic object position and/or a magnetic object orientation associated with the at least one magnetic object (110) relative to the reference coordinate system (XYZ).

3. The computer-implemented method (600) according to claim 1 or claim 2, wherein the interaction surface location (640) is defined based on a first set of geometric parameters associated with the interaction surface (210), more specifically wherein the first set of geometric parameters is indicative of a geometry of the interaction surface (210), particularly wherein the first set of geometric parameters comprises predefined geometric parameters associated with the interaction surface (210).

4. The computer-implemented method (600) according to any one of the preceding claims, wherein determining a user-borne device location (630) comprises:
deriving an interaction surface configuration (650) of the interaction surface (210) based on the interaction surface location, wherein the interaction surface configuration (650) is indicative of the interaction surface (210) being at least partially inclined with respect to the magnetometer plane (210), or, of the interaction surface (210) being substantially parallel with respect to the magnetometer plane (310).

5. The computer-implemented method (600) according to claim 4, wherein determining a user-borne device location (630) comprises:
determining a first interaction surface configuration (651) indicative of the interaction surface (210) being at least partially inclined with respect to the magnetometer plane (210), more specifically when the at least two interaction surface portions (210a, 210b) are arranged on a same portion plane (p) and at different distances (c1, c2) with respect to the magnetometer plane (310).

6. The computer-implemented method (600) according to claim 4 or claim 5, wherein determining a user-borne device location (630) comprises:
determining a second interaction surface configuration (652) indicative of the interaction surface (210) being substantially parallel with respect to the magnetometer plane (310), more specifically when a first interaction surface portion (210a) of the interaction surface (210) is arranged on a first portion plane (p1) and at a first portion distance (c1) with respect to the magnetometer plane (310), and when at least one second interaction surface portion (210b) of the interaction surface (210) is arranged on a second plane (p2) and at a second portion distance (p2) with respect to the magnetometer plane (310).

7. The computer-implemented method (600) according to any one of the preceding claims, wherein determining a user-borne device location (630) comprises:
determining a first magnetic object location (660) indicative of a first relative position and/or a first relative orientation of the at least one magnetic object (110) relative to the interaction surface (210), and more specifically wherein determining a first magnetic object location (650) comprises:
determining, based on the first relative position, whether the at least one magnetic object (110) is located on a side of the interaction surface (110) facing towards a user during operation of the user-borne device (100) or on a side of the interaction surface (110) facing away from a user during operation of the user-borne device (100).

8. The computer-implemented method (600) according to any one of the preceding claims, wherein determining a user-borne device location (630) comprises:
determining a second magnetic object location (670) indicative of a second relative position and/or a second relative orientation of the at least one magnetic object (110) relative to the user-borne device (100).

9. The computer-implemented method (600) according to claim 8, wherein determining a second magnetic object location (670) comprises:
detecting a position and/or orientation deviation (671) of the second relative orientation and/or the second relative position caused by a translation and/or a rotation of the at least one magnetic object (110) relative to the user-borne device (100), more specifically wherein the user-borne device (100) is in an actuated state, and
in response to detecting the position and/or orientation deviation, determining at least one trigger event associated with the position and/or orientation deviation.

10. The computer-implemented method (600) according to claim 8 or claim 9, when dependent on claim 7, wherein determining a user-borne device location (630) comprises:
assuming a user-borne device contact (631) between the user-borne device (100) and the interaction surface (210) based on the first magnetic object location (650) and based on the second magnetic object location (660).

11. The computer-implemented method (600) according to any one of the preceding claims, comprising:
representing (680) the user-borne device (100) as virtual object on at least one output device (510), wherein a movement of the virtual object on the output device (510) is based on a virtual reproduction of the location of the user-borne device (100) relative to the interaction surface (210).

12. A system (10) for determining a location of a user-borne device (100), comprising:
a user-borne device (100) operable on an interaction surface (210), wherein the user-borne device comprises at least one magnetic object (110), and
a plurality of magnetometers (300) configured to create a sensing volume and being associated with a magnetometer plane (310),
wherein the interaction surface (210) is defined within the sensing volume,
wherein the plurality of magnetometers (300) is configured to collect magnetic field measurements associated with the at least one magnetic object (110),
wherein the interaction surface (210) comprises an interaction surface configuration in which at least two interaction surface portions (210a, 210b) are arranged at different portion distances with respect to the magnetometer plane (310), and
wherein the system (10) is configured to execute a computer-implemented method (600) according to any one of claims 1 to 11.

13. The system (10) according to claim 12, wherein the interaction surface (210) comprises a first interaction surface configuration, wherein the interaction surface (210) is at least partially inclined with respect to the magnetometer plane (310).

14. The system (10) according to claim 12, wherein the interaction surface (210) comprises a first interaction surface portion (210a) and at least one second interaction surface portion (210b), and wherein the interaction surface (210) comprises a second interaction surface configuration, wherein the interaction surface (210) is substantially parallel with respect to the magnetometer plane (310), more specifically, wherein, during a user operation, the first interaction surface portion (210a) is arranged between the plurality of magnetometers (300) and a user (K), and wherein the at least one second interaction surface portion (210b) is arranged lateral to the plurality of magnetometers (300) and/or the magnetometer plane (310).

15. The system (10) according to any one of claims 12 to 14, wherein a second relative position and/or a second relative orientation of the at least one magnetic object (110) relative to the user-borne device (100) is defined based on a second set of geometric parameters, more specifically wherein the second set of geometric parameters defines a geometric position and a geometric orientation of the at least one magnetic object (110) relative to the user-borne device (100), more specifically in an initial state of the user-borne device (100).

## Patentansprüche

1. Computerimplementiertes Verfahren (600) zum Bestimmen eines Standorts einer benutzergetragenen Vorrichtung (100), umfassend:
- Sammeln von Magnetfeldmessungen (610), die mindestens einem Magnetobjekt (110) zugeordnet sind, mit einer Mehrzahl von Magnetometern (300), wobei die Mehrzahl von Magnetometern (300) konfiguriert ist, um ein Erfassungsvolumen zu erzeugen, und mit einer Magnetometerebene (310) assoziiert ist,
wobei das mindestens eine Magnetobjekt (110) an eine benutzergetragene Vorrichtung (100) gekoppelt ist, und
wobei die benutzergetragene Vorrichtung (100) auf einer Interaktionsoberfläche (210) betreibbar ist, die innerhalb des Erfassungsvolumens definiert ist,
- Erzeugen von Magnetobjektstandortdaten (620), die dem mindestens einen Magnetobjekt (110) zugeordnet sind, basierend auf den gesammelten Magnetfeldmessungen, und
- Bestimmen eines Standorts (630) der benutzergetragenen Vorrichtung relativ zu der Interaktionsoberfläche (210) basierend auf den Magnetobjektstandortdaten, wobei die Interaktionsoberfläche (210) eine Interaktionsoberflächenkonfiguration umfasst, in der mindestens zwei Interaktionsoberflächenabschnitte (210a, 210b) in unterschiedlichen Abschnittsabständen (c1, c2) bezüglich der Magnetometerebene (310) angeordnet sind, wobei das Bestimmen des Standorts (630) der benutzergetragenen Vorrichtung umfasst:
Bestimmen eines Interaktionsoberflächenstandorts (640), wobei der Interaktionsoberflächenstandort eine Interaktionsoberflächenposition, eine Interaktionsoberflächenorientierung und/oder einen Interaktionsoberflächenabstand (c) relativ zu einem Referenzkoordinatensystem (XYZ) anzeigt, das eine erste Referenzachse (X) und eine zweite Referenzachse (Y) umfasst, die auf der Magnetometerebene (310) definiert sind und orthogonal zueinander stehen.

2. Computerimplementiertes Verfahren (600) nach Anspruch 1, wobei das Erzeugen von Magnetobjektstandortdaten (620) umfasst:
Erzeugen von Magnetfeldmessdaten (621) basierend auf den gesammelten Magnetfeldmessungen, wobei die Magnetfeldmessdaten eine Magnetfeldposition, eine Magnetfeldorientierung und/oder eine Magnetfeldstärke relativ zu dem Referenzkoordinatensystem (XYZ) anzeigen, und insbesondere Verarbeiten von Magnetfeldmessdaten (622), um Magnetfeldmessdaten mit Magnetobjektstandortdaten in Beziehung zu setzen, wobei Magnetobjektstandortdaten eine Magnetobjektposition und/oder eine Magnetobjektorientierung anzeigen, die dem mindestens einen Magnetobjekt (110) relativ zu dem Referenzkoordinatensystem (XYZ) zugeordnet sind.

3. Computerimplementiertes Verfahren (600) nach Anspruch 1 oder 2, wobei der Interaktionsoberflächenstandort (640) basierend auf einem ersten Satz geometrischer Parameter definiert ist, die der Interaktionsoberfläche (210) zugeordnet sind, insbesondere wobei der erste Satz geometrischer Parameter eine Geometrie der Interaktionsoberfläche (210) anzeigt, insbesondere wobei der erste Satz geometrischer Parameter vorgegebene geometrische Parameter umfasst, die der Interaktionsoberfläche (210) zugeordnet sind.

4. Computerimplementiertes Verfahren (600) nach einem der vorstehenden Ansprüche, wobei das Bestimmen eines Standorts (630) der benutzergetragenen Vorrichtung umfasst:
Ableiten einer Interaktionsoberflächenkonfiguration (650) der Interaktionsoberfläche (210) basierend auf dem Interaktionsoberflächenstandort, wobei die Interaktionsoberflächenkonfiguration (650) anzeigt, dass die Interaktionsoberfläche (210) mindestens teilweise in Bezug auf die Magnetometerebene (210) geneigt ist, oder dass die Interaktionsoberfläche (210) im Wesentlichen parallel in Bezug auf die Magnetometerebene (310) ist.

5. Computerimplementiertes Verfahren (600) nach Anspruch 4, wobei das Bestimmen eines Standorts (630) der benutzergetragenen Vorrichtung umfasst:
Bestimmen einer ersten Interaktionsoberflächenkonfiguration (651), die anzeigt, dass die Interaktionsoberfläche (210) mindestens teilweise in Bezug auf die Magnetometerebene (210) geneigt ist, insbesondere wenn die mindestens zwei Interaktionsoberflächenabschnitte (210a, 210b) auf einer gleichen Abschnittsebene (p) angeordnet sind und sich in unterschiedlichen Abständen (c1, c2) in Bezug auf die Magnetometerebene (310) befinden.

6. Computerimplementiertes Verfahren (600) nach einem der Ansprüche 4 oder 5, wobei das Bestimmen eines Standorts (630) der benutzergetragenen Vorrichtung umfasst:
Bestimmen einer zweiten Interaktionsoberflächenkonfiguration (652), die anzeigt, dass die Interaktionsoberfläche (210) im Wesentlichen parallel zu der Magnetometerebene (310) ist, insbesondere wenn ein erster Interaktionsoberflächenabschnitt (210a) der Interaktionsoberfläche (210) auf einer ersten Abschnittsebene (p1) und in einem ersten Abschnittsabstand (c1) zu der Magnetometerebene (310) angeordnet ist, und wenn mindestens ein zweiter Interaktionsoberflächenabschnitt (210b) der Interaktionsoberfläche (210) auf einer zweiten Ebene (p2) und in einem zweiten Abschnittsabstand (p2) zu der Magnetometerebene (310) angeordnet ist.

7. Computerimplementiertes Verfahren (600) nach einem der vorstehenden Ansprüche, wobei das Bestimmen eines Standorts (630) der benutzergetragenen Vorrichtung umfasst:
Bestimmen eines ersten Magnetobjektstandorts (660), der eine erste relative Position und/oder eine erste relative Orientierung des mindestens einen Magnetobjekts (110) relativ zu der Interaktionsoberfläche (210) anzeigt, und insbesondere wobei das Bestimmen eines ersten Magnetobjektstandorts (650) umfasst:
Bestimmen, basierend auf dem ersten relativen Standort, ob sich das mindestens eine Magnetobjekt (110) auf einer Seite der Interaktionsoberfläche (110) befindet, die während des Betriebs der benutzergetragenen Vorrichtung (100) einem Benutzer zugewandt ist, oder auf einer Seite der Interaktionsoberfläche (110), die während des Betriebs der benutzergetragenen Vorrichtung (100) von einem Benutzer abgewandt ist.

8. Computerimplementiertes Verfahren (600) nach einem der vorstehenden Ansprüche, wobei das Bestimmen eines Standorts (630) der benutzergetragenen Vorrichtung umfasst:
Bestimmen eines zweiten Magnetobjektstandorts (670), der eine zweite relative Position und/oder eine zweite relative Orientierung des mindestens einen Magnetobjekts (110) relativ zu der benutzergetragenen Vorrichtung (100) angibt.

9. Computerimplementiertes Verfahren (600) nach Anspruch 8, wobei das Bestimmen eines zweiten Magnetobjektstandorts (670) umfasst:
Erfassen einer Positions- und/oder Orientierungsabweichung (671) der zweiten relativen Orientierung und/oder der zweiten relativen Position, die durch eine Translation und/oder eine Rotation des mindestens einen Magnetobjekts (110) relativ zu der benutzergetragenen Vorrichtung (100) verursacht wird, insbesondere wobei sich die benutzergetragene Vorrichtung (100) in einem betätigten Zustand befindet, und
als Reaktion auf das Erfassen der Positions- und/oder Orientierungsabweichung, Bestimmen mindestens eines Auslöseereignisses, das der Positions- und/oder Orientierungsabweichung zugeordnet ist.

10. Computerimplementiertes Verfahren (600) nach Anspruch 8 oder 9, wenn abhängig von Anspruch 7, wobei das Bestimmen eines Standorts (630) der benutzergetragenen Vorrichtung umfasst:
Annehmen eines benutzergetragenen Vorrichtungskontakts (631) zwischen der benutzergetragenen Vorrichtung (100) und der Interaktionsoberfläche (210) basierend auf dem ersten Magnetobjektstandort (650) und basierend auf dem zweiten Magnetobjektstandort (660).

11. Computerimplementiertes Verfahren (600) nach einem der vorstehenden Ansprüche, umfassend:
Darstellen (680) der benutzergetragenen Vorrichtung (100) als virtuelles Objekt auf mindestens einer Ausgabevorrichtung (510), wobei eine Bewegung des virtuellen Objekts auf der Ausgabevorrichtung (510) auf einer virtuellen Reproduktion des Standorts der benutzergetragenen Vorrichtung (100) relativ zu der Interaktionsoberfläche (210) basiert.

12. System (10) zum Bestimmen eines Standorts einer benutzergetragenen Vorrichtung (100), umfassend: eine benutzergetragene Vorrichtung (100), die auf einer Interaktionsoberfläche (210) betreibbar ist, wobei die benutzergetragene Vorrichtung mindestens ein Magnetobjekt (110) umfasst, und
eine Mehrzahl von Magnetometern (300), die konfiguriert sind, um ein Erfassungsvolumen zu erzeugen und einer Magnetometerebene (310) zugeordnet sind,
wobei die Interaktionsoberfläche (210) innerhalb des Erfassungsvolumens definiert ist,
wobei die Mehrzahl von Magnetometern (300) konfiguriert ist, um Magnetfeldmessungen, die dem mindestens einen Magnetobjekt (110) zugeordnet sind, zu sammeln,
wobei die Interaktionsoberfläche (210) eine Interaktionsoberflächenkonfiguration umfasst, in der mindestens zwei Interaktionsoberflächenabschnitte (210a, 210b) in unterschiedlichen Abschnittsabständen bezüglich der Magnetometerebene (310) angeordnet sind, und
wobei das System (10) konfiguriert ist, um ein computerimplementiertes Verfahren (600) nach einem der Ansprüche 1 bis 11 auszuführen.

13. System (10) nach Anspruch 12, wobei die Interaktionsoberfläche (210) eine erste Interaktionsoberflächenkonfiguration umfasst, wobei die Interaktionsoberfläche (210) mindestens teilweise in Bezug auf die Magnetometerebene (310) geneigt ist.

14. System (10) nach Anspruch 12, wobei die Interaktionsoberfläche (210) einen ersten Interaktionsoberflächenabschnitt (210a) und mindestens einen zweiten Interaktionsoberflächenabschnitt (210b) umfasst, und wobei die Interaktionsoberfläche (210) eine zweite Interaktionsoberflächenkonfiguration umfasst, wobei die Interaktionsoberfläche (210) im Wesentlichen parallel in Bezug auf die Magnetometerebene (310) ist, insbesondere wobei während eines Benutzervorgangs der erste Interaktionsoberflächenabschnitt (210a) zwischen der Mehrzahl von Magnetometern (300) und einem Benutzer (K) angeordnet ist, und wobei der mindestens eine zweite Interaktionsoberflächenabschnitt (210b) seitlich zu der Mehrzahl von Magnetometern (300) und/oder der Magnetometerebene (310) angeordnet ist.

15. System (10) nach einem der Ansprüche 12 bis 14, wobei eine zweite relative Position und/oder eine zweite relative Orientierung des mindestens einen Magnetobjekts (110) relativ zu der benutzergetragenen Vorrichtung (100) basierend auf einem zweiten Satz geometrischer Parameter definiert wird, insbesondere wobei der zweite Satz geometrischer Parameter eine geometrische Position und eine geometrische Orientierung des mindestens einen Magnetobjekts (110) relativ zu der benutzergetragenen Vorrichtung (100) definiert, insbesondere in einem Anfangszustand der benutzergetragenen Vorrichtung (100).

## Revendications

1. Procédé mis en œuvre par ordinateur (600) destiné à déterminer un emplacement d'un dispositif porté par l'utilisateur (100), comprenant :
- la collecte de mesures de champ magnétique (610) associées à au moins un objet magnétique (110) avec une pluralité de magnétomètres (300), dans lequel la pluralité de magnétomètres (300) est configurée pour créer un volume de détection et est associée à un plan de magnétomètre (310),
dans lequel l'au moins un objet magnétique (110) est couplé à un dispositif porté par l'utilisateur (100), et
dans lequel le dispositif porté par l'utilisateur (100) peut fonctionner sur une surface d'interaction (210) définie à l'intérieur du volume de détection,
- la génération de données d'emplacement d'objet magnétique (620) associées à l'au moins un objet magnétique (110) sur la base des mesures de champ magnétique collectées, et
- la détermination d'un emplacement de dispositif porté par l'utilisateur (630) par rapport à la surface d'interaction (210) sur la base des données d'emplacement d'objet magnétique, dans lequel la surface d'interaction (210) comprend une configuration de surface d'interaction dans laquelle au moins deux parties de surface d'interaction (210a, 210b) sont agencées à différentes distances de partie (c1, c2) par rapport au plan de magnétomètre (310), dans lequel la détermination de l'emplacement de dispositif porté par l'utilisateur (630) comprend :
la détermination d'un emplacement de surface d'interaction (640), dans lequel l'emplacement de surface d'interaction indique une position de surface d'interaction, une orientation de surface d'interaction et/ou une distance de surface d'interaction (c) par rapport à un système de coordonnées de référence (XYZ) comprenant un premier axe de référence (X) et un second axe de référence (Y) définis sur le plan de magnétomètre (310) et étant orthogonaux l'un par rapport à l'autre.

2. Procédé mis en œuvre par ordinateur (600) selon la revendication 1, dans lequel la génération de données d'emplacement d'objet magnétique (620) comprend :
la génération de données de mesure de champ magnétique (621) sur la base des mesures de champ magnétique collectées, dans lequel les données de mesure de champ magnétique indiquent une position de champ magnétique, une orientation de champ magnétique et/ou une intensité de champ magnétique par rapport au système de coordonnées de référence (XYZ), et plus spécifiquement, le traitement de données de mesure de champ magnétique (622) pour relier des données de mesure de champ magnétique à des données d'emplacement d'objet magnétique, dans lequel les données d'emplacement d'objet magnétique indiquent une position d'objet magnétique et/ou une orientation d'objet magnétique associées à l'au moins un objet magnétique (110) par rapport au système de coordonnées de référence (XYZ).

3. Procédé mis en œuvre par ordinateur (600) selon la revendication 1 ou la revendication 2, dans lequel l'emplacement de surface d'interaction (640) est défini sur la base d'un premier ensemble de paramètres géométriques associés à la surface d'interaction (210), plus précisément dans lequel le premier ensemble de paramètres géométriques indique une géométrie de la surface d'interaction (210), en particulier dans lequel le premier ensemble de paramètres géométriques comprend des paramètres géométriques prédéfinis associés à la surface d'interaction (210).

4. Procédé mis en œuvre par ordinateur (600) selon l'une quelconque des revendications précédentes, dans lequel la détermination d'un emplacement de dispositif porté par l'utilisateur (630) comprend :
la dérivation d'une configuration de surface d'interaction (650) de la surface d'interaction (210) sur la base de l'emplacement de surface d'interaction, dans lequel la configuration de surface d'interaction (650) indique que la surface d'interaction (210) est au moins partiellement inclinée par rapport au plan de magnétomètre (210), ou que la surface d'interaction (210) est sensiblement parallèle par rapport au plan de magnétomètre (310).

5. Procédé mis en œuvre par ordinateur (600) selon la revendication 4, dans lequel la détermination d'un emplacement de dispositif porté par l'utilisateur (630) comprend :
la détermination d'une première configuration de surface d'interaction (651) indiquant que la surface d'interaction (210) est au moins partiellement inclinée par rapport au plan de magnétomètre (210), plus spécifiquement lorsque les au moins deux parties de surface d'interaction (210a, 210b) sont agencées sur un même plan de partie (p) et à des distances différentes (c1, c2) par rapport au plan de magnétomètre (310).

6. Procédé mis en œuvre par ordinateur (600) selon la revendication 4 ou la revendication 5, dans lequel la détermination d'un emplacement de dispositif porté par l'utilisateur (630) comprend :
la détermination d'une seconde configuration de surface d'interaction (652) indiquant que la surface d'interaction (210) est sensiblement parallèle par rapport au plan de magnétomètre (310), plus particulièrement lorsqu'une première partie de surface d'interaction (210a) de la surface d'interaction (210) est agencée sur un premier plan de partie (p1) et au niveau d'une première distance de partie (c1) par rapport au plan de magnétomètre (310), et lorsqu'au moins une seconde partie de surface d'interaction (210b) de la surface d'interaction (210) est agencée sur un second plan (p2) et au niveau d'une seconde distance de partie (p2) par rapport au plan de magnétomètre (310).

7. Procédé mis en œuvre par ordinateur (600) selon l'une quelconque des revendications précédentes, dans lequel la détermination d'un emplacement de dispositif porté par l'utilisateur (630) comprend :
la détermination d'un premier emplacement d'objet magnétique (660) indiquant une première position relative et/ou une première orientation relative de l'au moins un objet magnétique (110) par rapport à la surface d'interaction (210), et plus précisément dans lequel la détermination d'un premier emplacement d'objet magnétique (650) comprend :
le fait de déterminer, sur la base de la première position relative, si l'au moins un objet magnétique (110) est situé sur un côté de la surface d'interaction (110) orienté vers un utilisateur pendant le fonctionnement du dispositif porté par l'utilisateur (100) ou sur un côté de la surface d'interaction (110) tourné à l'opposé d'un utilisateur pendant le fonctionnement du dispositif porté par l'utilisateur (100).

8. Procédé mis en œuvre par ordinateur (600) selon l'une quelconque des revendications précédentes, dans lequel la détermination d'un emplacement de dispositif porté par l'utilisateur (630) comprend :
la détermination d'un second emplacement d'objet magnétique (670) indiquant une seconde position relative et/ou une seconde orientation relative de l'au moins un objet magnétique (110) par rapport au dispositif porté par l'utilisateur (100).

9. Procédé mis en œuvre par ordinateur (600) selon la revendication 8, dans lequel la détermination d'un second emplacement d'objet magnétique (670) comprend :
la détection d'un écart de position et/ou d'orientation (671) de la seconde orientation relative et/ou de la seconde position relative provoqué par une translation et/ou une rotation de l'au moins un objet magnétique (110) par rapport au dispositif porté par l'utilisateur (100), plus spécifiquement dans lequel le dispositif porté par l'utilisateur (100) se trouve dans un état actionné, et
la détermination, en réponse à la détection de l'écart de position et/ou d'orientation, d'au moins un événement déclencheur associé à l'écart de position et/ou d'orientation.

10. Procédé mis en œuvre par ordinateur (600) selon la revendication 8 ou la revendication 9, lorsqu'elle dépend de la revendication 7, dans lequel la détermination d'un emplacement de dispositif porté par l'utilisateur (630) comprend :
dans l'hypothèse d'un contact de dispositif porté par l'utilisateur (631) entre le dispositif porté par l'utilisateur (100) et la surface d'interaction (210) sur la base du premier emplacement d'objet magnétique (650) et sur la base du second emplacement d'objet magnétique (660).

11. Procédé mis en œuvre par ordinateur (600) selon l'une quelconque des revendications précédentes, comprenant :
la représentation (680) du dispositif porté par l'utilisateur (100) en tant qu'objet virtuel sur au moins un dispositif de sortie (510), dans lequel un mouvement de l'objet virtuel sur le dispositif de sortie (510) est basé sur une reproduction virtuelle de l'emplacement du dispositif porté par l'utilisateur (100) par rapport à la surface d'interaction (210).

12. Système (10) permettant de déterminer un emplacement d'un dispositif porté par l'utilisateur (100), comprenant : un dispositif porté par l'utilisateur (100) pouvant fonctionner sur une surface d'interaction (210), dans lequel le dispositif porté par l'utilisateur comprend au moins un objet magnétique (110), et
une pluralité de magnétomètres (300) configurés pour créer un volume de détection et étant associés à un plan de magnétomètre (310),
dans lequel la surface d'interaction (210) est définie à l'intérieur du volume de détection,
dans lequel la pluralité de magnétomètres (300) sont configurés pour collecter des mesures de champ magnétique associées à l'au moins un objet magnétique (110),
dans lequel la surface d'interaction (210) comprend une configuration de surface d'interaction dans laquelle au moins deux parties de surface d'interaction (210a, 210b) sont agencées à des distances de partie différentes par rapport au plan de magnétomètre (310), et
dans lequel le système (10) est configuré pour exécuter un procédé mis en œuvre par ordinateur (600) selon l'une quelconque des revendications 1 à 11.

13. Système (10) selon la revendication 12, dans lequel la surface d'interaction (210) comprend une première configuration de surface d'interaction, dans lequel la surface d'interaction (210) est au moins partiellement inclinée par rapport au plan de magnétomètre (310).

14. Système (10) selon la revendication 12, dans lequel la surface d'interaction (210) comprend une première partie de surface d'interaction (210a) et au moins une seconde partie de surface d'interaction (210b), et dans lequel la surface d'interaction (210) comprend une seconde configuration de surface d'interaction, dans lequel la surface d'interaction (210) est sensiblement parallèle par rapport au plan de magnétomètre (310), plus précisément, dans lequel, pendant une opération utilisateur, la première partie de surface d'interaction (210a) est agencée entre la pluralité de magnétomètres (300) et un utilisateur (K), et dans lequel l'au moins une seconde partie de surface d'interaction (210b) est agencée latéralement à la pluralité de magnétomètres (300) et/ou au plan de magnétomètre (310).

15. Système (10) selon l'une quelconque des revendications 12 à 14, dans lequel une seconde position relative et/ou une seconde orientation relative de l'au moins un objet magnétique (110) par rapport au dispositif porté par l'utilisateur (100) sont définies sur la base d'un second ensemble de paramètres géométriques, plus précisément dans lequel le second ensemble de paramètres géométriques définit une position géométrique et une orientation géométrique de l'au moins un objet magnétique (110) par rapport au dispositif porté par l'utilisateur (100), plus spécifiquement dans un état initial du dispositif porté par l'utilisateur (100).
